# EUROPEAN PATENT SPECIFICATION

(11) **EP 4 594 435 B1**
(45) Date of publication and mention of the grant of the patent: **04.11.2026**
(21) Application number: 23786645.4
(22) Date of filing: 26.09.2023
(51) Int. Cl.: C09D 11/322, C09D 11/326, C09D 11/107, D06P 5/30

(54) **PRINTING INK**
DRUCKFARBE
ENCRE D'IMPRESSION

(30) Priority: 26.09.2022 GB 202214011; 06.04.2023 GB 202305188
(43) Date of publication of application: 06.08.2025
(73) Proprietor: Fujifilm Speciality Ink Systems Limited, Broadstairs Kent CT10 2LE (GB); FUJIFILM Imaging Colorants Limited, Broadstairs Kent CT10 2LE (GB)
(72) Inventor: COE, Iris, Broadstairs Kent CT10 2LE (GB); ROYLES, Brodyck, Broadstairs Kent CT1 2LE (GB); SWIECICKA-FICHOU, Joanna, Broadstairs Kent CT10 2LE (GB)
(74) Representative: Elkington and Fife LLP
(86) International application number: PCT/GB2023/052486
(87) International publication number: WO 2024/069154

(56) References cited:
- WO-A1-2018/073560
- CN-A- 108 192 421
- US-A1- 2016 032 118
- US-A1- 2021 138 776
- US-A1- 2021 395 553
- US-A1- 2022 153 047

## Description

The present invention relates to a printing ink and, in particular, an inkjet ink for printing onto textiles. The present invention also relates to a method of printing said ink.

Digital inkjet printing is commonly used in the textile industry as it offers many advantages over analogue printing such as a rapid and facile print process, print flexibility and much shorter preparation times. Digital inkjet printing is also more environmentally friendly than analogue printing as it offers substantial reductions in energy consumption and chemical, water and carbon dioxide waste.

There are two inkjet inks typically used in the textile industry, dye-based inkjet inks and pigmented inkjet inks.

Dye-based inkjet inks provide printed textiles with brilliant colours, good handle and wash- and rub-fastness. However, the textile substrate dictates the particular dye used. Reactive dyes are used for cellulosic and protein fibres, acid dyes are limited to protein fibres and dispersed and sublimation dyes can only be applied to polyester substrates.

Printing processes involving dye-based inkjet inks also tend to be multi-step and complex. For example, reactive dyes necessitate pre-treating the textile followed by printing, steaming and then washing the textile. All of these steps are energy and water intensive. Sublimation dyes require printing onto a transfer medium and applying heat and pressure to transfer the print to the substrate. Pigmented inkjet inks offer a significant advantage in terms of universal applicability to textile substrates. Printing using pigmented inkjet inks is also simpler, quicker and more environmentally friendly than using dye-based inkjet inks as the ink can just be printed on the textile and heat treated.

Pigmented inkjet inks typically contain a binder resin to enable the pigment to bind to the textile substrate. However, the binder resin tends to provide printed substrates with a poor handle that feel very stiff to the touch, and sub-optimal optical density, print wash, rub and perspiration fastness.

There is therefore a need in the art for a pigmented inkjet ink for printing onto textiles that provides a printed substrate with a good handle and optical density, without compromising the wash-fastness and adhesion. As background prior art, US2022153047 might be cited.

Accordingly, the present invention provides an inkjet ink comprising:
a continuous aqueous phase;
a dispersed encapsulated pigment comprising pigment particles encapsulated by a cross-linked polymer coating having pendant hydrophilic groups including hydroxyl groups; and
a cross-linking agent having two or more protected reactive groups, wherein the two or more protected reactive groups, when deprotected, are reactive to hydroxyl groups,
wherein the ink contains less than 5% by weight of a binder resin, based on the total weight of the ink; and wherein the dispersed encapsulated pigment is present in an amount of 3 to 20% by weight, based on the total weight of the ink.

The present invention also provides a method of inkjet printing comprising the following steps in order:
(i) providing an inkjet ink of the present invention;
(ii) inkjet printing the inkjet ink onto a substrate to provide a printed substrate;
(iii) drying the printed substrate to remove water; and
(iv) deprotecting the two or more protected reactive groups.

The present invention will now be described with reference to the accompanying drawings, in which:
Fig. 1 shows the handle/softness of substrates, to which inks have been drawn down upon, using inks of the invention (left-hand side and middle) and a comparative ink (right-hand side);
Fig. 2 shows the L* values per wash of printed substrates at a range of print densities using an ink of the invention (line with circles) and a comparative ink (line with squares);
Fig. 3 shows optical density values per wash of printed substrates at a range of print densities using an ink of the invention (line with circles) and a comparative ink (line with squares);
Fig. 4 shows photographs of substrates, to which inks have been drawn down upon, after no washes (left-hand side), one wash (position X), five washes (position Y) and ten washes (position Z) using inks of the invention (Inks E.1 and E.2) and comparative inks (Inks A and C);
Fig. 5 shows optical density values of printed substrates at a range of print densities using an ink of the invention (line with circles) and a comparative ink (line with squares);
Fig. 6A shows a micrograph of a printed substrate using a comparative ink at x90 magnification;
Fig. 6B shows a micrograph of a printed substrate using an ink of the invention at x90 magnification;
Fig. 7A shows a micrograph of a printed substrate using a comparative ink at x150 magnification;
Fig 7B shows a micrograph of a printed substrate using an ink of the invention at x150 magnification;
Fig. 8A shows the wash-fastness deviation of Ink F of the invention from comparative Ink A;
Fig. 8B shows the wash-fastness deviation of Ink G of the invention from comparative Ink A;
Fig. 9 shows the wash-fastness deviation of Ink I of the invention from comparative Ink A;
Fig. 10A shows the crock deviation of Ink F of the invention from comparative Ink A;
Fig. 10B shows the crock deviation of Ink G of the invention from comparative Ink A; and
Fig. 11 shows the wash-fastness/colour change results for black Ink M of the invention compared to comparative black Ink Q.

The inventors have surprisingly found that the inclusion of a cross-linking agent of the present invention in an aqueous inkjet ink containing a dispersed encapsulated pigment of the present invention provides a pigmented inkjet ink for printing onto textiles, which provides a printed substrate with a good handle and optical density, without compromising the wash-fastness and adhesion.

The two or more protected reactive groups of the cross-linking agent, when deprotected, can react with the hydroxyl groups of the encapsulated pigment and any free hydroxyl groups on the substrate, thus binding pigment particles together and tethering the encapsulated pigment to the substrate. This improves the adhesion between the encapsulated pigment and the substrate leading to wash-fast and robust printed substrates. It is surprising that such a formulation can provide such good adhesion without requiring a binder resin and therefore the printed substrates also benefit from a good handle and optical density.

The inkjet ink of the present invention comprises a continuous aqueous phase and is hence an aqueous ink. Water and, when present, an organic solvent define the continuous aqueous phase. The continuous aqueous phase acts as a carrier for the components of the ink and ensures that the ink has the appropriate viscosity for printing. As with known aqueous inks, water is required to evaporate from the printed ink, typically on heating, in order to allow the ink to dry.

In a preferred embodiment, water is present in a total amount of 30 to 80% by weight, more preferably 40 to 70% by weight and most preferably 45 to 65% by weight, based on the total weight of the ink. The total amount of water includes water that is added as a separate component and any water that may be present in other components such as the encapsulated pigment and the cross-linking agent.

The continuous aqueous phase preferably comprises, in addition to water, an organic solvent. The organic solvent is in the form of a liquid at ambient temperature and is miscible with water. As with known solvent-based inkjet inks, the organic solvent is required to evaporate from the printed ink, typically on heating, in order to allow the ink to dry.

The organic solvent may be a single solvent or a mixture of two or more solvents. The solvent can be selected from any solvent commonly used in the printing industry, such as glycol ethers, glycol ether esters, alcohols, glycols, ketones and esters. In a preferred embodiment, the inkjet ink further comprises triethylene glycol and/or glycerol.

The organic solvent is preferably present in the inkjet ink in a total amount of 5 to 55% by weight, more preferably 20 to 50% by weight and most preferably 30 to 45% by weight, based on the total weight of the ink.

The inkjet ink of the present invention further comprises a dispersed encapsulated pigment comprising pigment particles encapsulated by a cross-linked polymer coating having pendant hydrophilic groups including hydroxyl groups.

The encapsulated pigment is dispersed in the continuous aqueous phase of the inkjet ink.

Encapsulating the pigment particles by a cross-linked polymer coating having pendant hydrophilic groups including hydroxyl groups ensures that the pigment is uniformly and stably dispersed in the continuous aqueous phase of the ink. The polymer coating is cross-linked to prevent desorption from the pigment particles.

The dispersed encapsulated pigment comprises pigment particles encapsulated by a cross-linked polymer coating having pendant hydrophilic groups including hydroxyl groups.

In a preferred embodiment, the dispersed encapsulated pigment consists of pigment particles encapsulated by a cross-linked polymer coating having pendant hydrophilic groups including hydroxyl groups, i.e. only pigment particles are encapsulated by the cross-linked polymer coating and no additional components are encapsulated by the cross-linked polymer coating. In this way, the dispersed encapsulated pigment and the cross-linking agent having two or more protected reactive groups are completely separate components of the inkjet ink.

Dispersed encapsulated pigments for inclusion in the inkjet ink are known and include Pro-Jet^{®} APD 1000, 3000 and 4000 pigment dispersions commercially available from FUJIFILM Imaging Colorants Limited. Additional dispersed encapsulated pigments suitable for inclusion in the inkjet ink include those described in EP 3 239 212, EP 3 395 852, EP 3 397 703, EP 3 527 633, EP 3 498 792, EP 3 650 509, EP 3 650 510 and GB 2 592 298.

The preparation of a dispersed encapsulated pigment for inclusion in the inkjet ink of the present invention is also known and is described in at least WO 2006/064193 and WO 2010/038071.

Typically, the dispersed encapsulated pigment is prepared by mixing pigment particles with a cross-linkable polymer in a liquid medium and adding a cross-linking agent. In this process, the cross-linkable polymer absorbs onto a surface of the pigment particles and is then cross-linked using the cross-linking agent to form a polymer coating, having pendant hydrophilic groups including hydroxyl groups, around the pigment particles.

The cross-linked polymer coating can be likened to a cage surrounding each individual pigment particle.

For the avoidance of doubt, the cross-linking agent used to prepare the dispersed encapsulated pigment is typically different to the cross-linking agent having two or more protected reactive groups present in the inkjet ink of the present invention.

Pigment particles include any of the classes of pigment particles described in the Third Edition of the Colour Index (1971) and subsequent revisions of, and supplements thereto, under the chapter headed "Pigments". Examples of organic pigment particles include those from the azo (including disazo and condensed azo), thioindigo, indanthrone, isoindanthrone, anthanthrone, anthraquinone, isodibenzanthrone, triphendioxazine, quinacridone, diketopyrrolopyrrole and phthalocyanine series, such as copper phthalocyanine and its nuclear halogenated derivatives, and also lakes of acid, basic and mordant dyes. Examples of inorganic pigment particles include carbon black, titanium dioxide, aluminium oxide, iron oxide and silicon dioxide.

Preferred pigment particles are phthalocyanines, azo, indanthrone, anthanthrone and quinacridone, diketopyrrolopyrrole, carbon black pigment particles or any combination thereof.

Preferably, the pigment particles are cyan, magenta, yellow, black, violet, red, orange, green and white pigment particles or any combination thereof.

The cross-linked polymer coating having pendant hydrophilic groups including hydroxyl groups is not limited and may be formed using any monomers and cross-linking agents as long as pendant hydrophilic groups including hydroxyl groups are introduced.

In a preferred embodiment, the cross-linked polymer coating having pendant hydrophilic groups including hydroxyl groups contains two or more monomers, which are polymerised and subsequently cross-linked with a cross-linking agent. More preferably, the cross-linked polymer coating having pendant hydrophilic groups including hydroxyl groups contains one or more (meth)acrylate monomers and a (meth)acrylic acid monomer, which are polymerised and subsequently cross-linked with an epoxide. In a particularly preferred embodiment, the cross-linked polymer coating having pendant hydrophilic groups including hydroxyl groups contains benzyl (meth)acrylate and (meth)acrylic acid monomers, which are polymerised and subsequently cross-linked with an epoxide. In this embodiment, the pendant hydrophilic groups include carboxyl groups (from the (meth)acrylic acid monomers) and hydroxyl groups (resulting from epoxide ring opening during cross-linking).

Preferably, the epoxide used to prepare the cross-linked polymer coating having pendant hydrophilic groups including hydroxyl groups has two or more epoxy groups. Preferably, the epoxide is an epichlorohydrin derivative. Examples of suitable epoxides include ethylene glycol diglycidyl ether, resorcinol diglycidyl ether, neopentyl glycol diglycidyl ether, 1,6-hexanediol diglycidyl ether, hydrogenated bisphenol A diglycidyl ether, polybutadiene diglycidyl ether, diethylene glycol diglycidyl ether, polyethylene glycol, diglycidyl ether, dipropylene glycol diglycidyl ether, polypropylene glycol diglycidyl ether, sorbitol polyglycidyl ether, polyglycerol polyglycidyl ether, pentaerythritol polyglycidyl ether, diglycerol polyglycidyl ether, glycerol poly glycidyl ether, trimethylolpropane polygycidyl ether and combinations thereof. Trimethylolpropane polygycidyl ether is particularly preferred.

In a preferred embodiment, the cross-linked polymer coating having pendant hydrophilic groups including hydroxyl groups contains two or more monomers, which are polymerised and subsequently cross-linked with a cross-linking agent, wherein at least one of the two or more monomers has hydroxyl groups. More preferably, the cross-linked polymer coating having pendant hydrophilic groups including hydroxyl groups contains one or more (meth)acrylate monomers and a (meth)acrylic acid monomer, which are polymerised and subsequently cross-linked with an epoxide, wherein at least one of the one or more (meth)acrylate monomers has hydroxyl groups. In a particularly preferred embodiment, the cross-linked polymer coating having pendant hydrophilic groups including hydroxyl groups contains benzyl (meth)acrylate and (meth)acrylic acid monomers in combination with an additional monomer having hydroxyl groups, which are polymerised and subsequently cross-linked with an epoxide. 2-Hydroxypropyl (meth)acrylate (HPMA) is particularly preferred as the additional monomer having hydroxyl groups. The epoxide is as described in the preceding paragraph.

In this embodiment, the pendant hydrophilic groups include carboxyl groups (from the (meth)acrylic acid monomers) and hydroxyl groups (from the additional monomer having hydroxyl groups together with hydroxyl groups resulting from epoxide ring opening during cross-linking). Additional hydroxyl groups means that more hydroxyl groups are available on the encapsulated pigment for reaction with the cross-linking agent of the present invention, when deprotected, leading to enhanced adhesion between the encapsulated pigment and the substrate and/or enhanced cross-linking between the encapsulated pigment particles on the substrate.

A cross-linked polymer coating containing an additional monomer having hydroxyl groups also means that the cross-linked polymer coating is potentially more hydrophilic depending on the degree of cross-linking and acid value. A more hydrophilic cross-linked polymer coating allows for deeper penetration of the encapsulated pigment in hydrophilic substrates such as textile substrates having free hydroxyl groups at the surface of the substrate, leading to enhanced reaction and adhesion between the encapsulated pigment and the substrate. Such a printed substrate therefore has improved wash-fastness and robustness.

The pendant hydrophilic groups including hydroxyl groups are pendant in that they extend from the cross-linked polymer coating around the pigment particles. They are thus available to react with the two or more protected reactive groups of the cross-linking agent present in the inkjet ink of the present invention, when deprotected.

The pendant hydrophilic groups including hydroxyl groups are hydrophilic in that they are attracted to water molecules. They are not limited other than they must include hydroxyl groups. Examples of non-limiting additional pendant hydrophilic groups include non-ionic and ionic groups.

Hydroxyl groups are non-ionic groups. Hydroxyl groups are particularly good at reacting with the two or more protected reactive groups of the cross-linking agent, when deprotected. This leads to improved binding between pigment particles and improved tethering of the encapsulated pigment to the substrate, leading to better adhesion between the encapsulated pigment and the substrate. The printed substrates are hence more wash-fast and robust than would otherwise be obtained with less reactive pendant hydrophilic groups such as carboxyl groups.

The hydroxyl groups may be primary and/or secondary hydroxyl groups but the pendant hydrophilic groups preferably include primary hydroxyl groups. Primary hydroxyl groups react faster than secondary hydroxyl groups, leading to an improved reaction between the encapsulated pigment and the cross-linking agent, when deprotected.

Any ionic hydrophilic groups may be cationic or anionic but anionic groups are preferred. Examples of anionic groups include phenoxy, carboxyl, sulphonic acid, sulphuric acid, phosphonic acid, polyphosphoric and phosphoric acid groups. Carboxyl, sulphonic acid, sulphuric acid, phosphonic acid, polyphosphoric and phosphoric acid groups may be in the free acid or salt form.

Particularly preferred additional pendant hydrophilic groups are carboxyl and/or amino groups. That is, the pendant hydrophilic groups preferably includes hydroxyl groups in combination with carboxyl and/or amino groups, more preferably hydroxyl groups in combination with carboxyl groups. Carboxyl groups are particularly good at stabilising the dispersed encapsulated pigment in the continuous aqueous phase. Carboxyl groups can also react with the two or more protected reactive groups of the cross-linking agent, when deprotected.

In a preferred embodiment, the dispersed encapsulated pigment is added to the ink in the form of an encapsulated pigment dispersion. Preferably, the encapsulated pigment dispersion is added to the ink in an amount of 10 to 40% by weight, more preferably 15 to 35% by weight and most preferably 20 to 30% by weight, based on the total weight of the ink. A higher concentration of encapsulated pigment dispersion may be required for white inks, for example up to and including 70% by weight, based on the total weight of the ink. For the avoidance of doubt, the amount of encapsulated pigment dispersion includes any water or additional solvent added as part of the encapsulated pigment dispersion.

The dispersed encapsulated pigment is present in an amount of 3 to 20% by weight, preferably 3 to 15% by weight, more preferably 3 to 8% by weight, and most preferably 3 to 7% by weight, based on the total weight of the ink. A higher concentration of the dispersed encapsulated pigment may be required for white inks, for example up to and including 30% by weight, or 25% by weight, based on the total weight of the ink. For the avoidance of doubt, these amounts correspond to the dispersed encapsulated pigment per se.

Dispersed encapsulated pigment particles dispersed in the ink should be sufficiently small to allow the ink to pass through an inkjet nozzle, typically having a particle size less than 8 µm, preferably less than 5 µm, more preferably less than 1 µm, more preferably less than 0.5 µm and particularly preferably less than 0.2 µm.

The inkjet ink of the present invention further comprises a cross-linking agent having two or more protected reactive groups, wherein the two or more protected reactive groups, when deprotected, are reactive to hydroxyl groups.

The cross-linking agent is not particularly limited as long as the two or more protected reactive groups can be deprotected and are then reactive to hydroxyl groups.

In a preferred embodiment, the cross-linking agent is a blocked di- and/or poly-isocyanate where the two or more isocyanate groups are protected. That is, the cross-linking agent preferably is a blocked diisocyanate, a blocked polyisocyanate or a mixture of a blocked diisocyanate and a blocked polyisocyanate. The blocked di- and/or poly-isocyanate has two or more protected isocyanate groups.

In a preferred embodiment, the cross-linking agent is a blocked diisocyanate. In another preferred embodiment, the cross-linking agent is a blocked polyisocyanate. In a further preferred embodiment, the cross-linking agent is a mixture of a blocked diisocyanate and a blocked polyisocyanate.

As used herein, a blocked diisocyanate comprises two blocked isocyanate groups and a blocked polyisocyanate comprises three or more blocked isocyanate groups. When a blocked polyisocyanate is present, the blocked polyisocyanate preferably comprises three to six blocked isocyanate groups, more preferably three or four blocked isocyanate groups. A blocked polyisocyanate having three blocked isocyanate groups is particularly preferred.

When the cross-linking agent is a blocked di- and/or poly-isocyanate, the two or more protected reactive groups are therefore two or more blocked isocyanate groups and the two or more reactive groups are two or more isocyanate groups. The isocyanate groups are reactive to hydroxyl groups thus forming a urethane linkage.

Synthesis of blocked isocyanates is well-known to the skilled person and has been reviewed by D.A. Wicks and Z.W. Wicks Jr., Progress in Organic Coatings, 1999, 36, 148-172 and E. Delebecq et al., Chem; Rev., 2013, 113, 80-118. Classic blocked isocyanates are defined as chemical components that are capable of forming isocyanates from a precursor upon thermal activation. In general, the reaction proceeds as shown below, where X is any suitable leaving group:

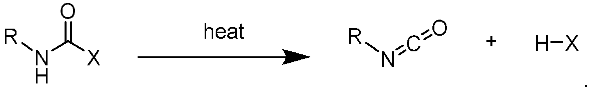

The activation temperature, also called the deblocking temperature, is dependent on the leaving group. Suitable isocyanate precursors are shown below having a variable deblocking temperature between 100°C and 170°C: 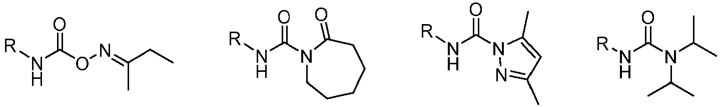 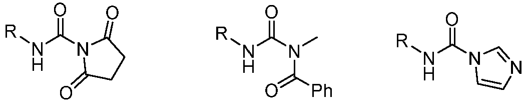 wherein R is one or more blocked isocyanate groups connected by a linking group. The linking group is not particularly limited other than by the constraints imposed by the use in an inkjet ink, such as viscosity, stability, toxicity etc. The linking group is typically alkylene, cycloalkylene, arylene or combinations with at least one of alkyl, cycloalkyl and/or aryl, any of which may be interrupted by heteroatoms. Non-limiting examples of linking groups commonly used in the art include C₁₋₁₈ alkylene, C₃₋₁₈ cycloalkylene, C₆₋₁₀ arylene and combinations with at least one of C₁₋₁₈ alkyl, C₃₋₁₈ cycloalkyl and/or C₆₋₁₀ aryl, such as C₆₋₁₀ aryl- or C₃₋₁₈ cycloalkyl-substituted C₁₋₁₈ alkylene, any of which may be interrupted by 1-16 heteroatoms, such as oxygen or nitrogen, with nitrogen further substituted by any of the above described substituents.

Active methylene compounds as blocking agents are widely used as alternatives for classic blocked isocyanates, operating via an alternative reaction pathway, not yielding an intermediate isocyanate but crosslinking the system via ester formation as disclosed in Progress in Organic Coatings, 36, 148-172 (1999), paragraph 3.8. Suitable examples of active methylene group blocked isocyanates are shown below: 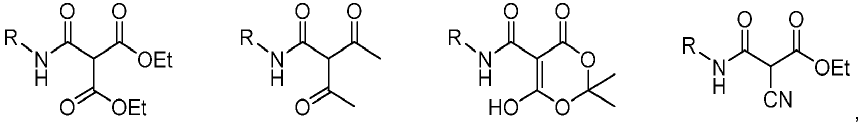 wherein R is as described above.

Preferred blocked di- and/or poly-isocyanates are selected from blocked hexamethylene diisocyanate, isophorone diisocyanate, tolyl diisocyanate, xylylene diisocyanate, a hexamethylene diisocyanate trimer, trimethylhexylene diisocyanate, diphenylmethane diisocyanate, dicyclohexylmethane diisocyanate and mixtures thereof. Preferably, the blocked di- and/or poly-isocyanate is a blocked hexamethylene diisocyanate, more preferably a blocked hexamethylene diisocyanate trimer, most preferably a blocked hexamethylene diisocyanate isocyanurate trimer.

The leaving group of the blocked di- and/or poly-isocyanate is not particularly limited and can be any group capable of leaving at a temperature between 100°C and 170°C and one that is not hazardous. The leaving groups of the blocked di- and/or poly-isocyanate may the same or different but are preferably the same. In a preferred embodiment, the leaving group of the blocked di- and/or poly-isocyanate is 3,5-dimethylpyrazyl (DMP). DMP is favoured from a health and safety perspective and because of its relatively low deblocking temperature of 115°C.

When the blocked di- and/or poly-isocyanate is a blocked hexamethylene diisocyanate, the blocked hexamethylene diisocyanate may comprise additional functionality such as ethylene oxide groups or a residue of a polyhydroxy carboxylic acid as described in US 6,063,860.

A particularly preferred blocked di- and/or poly-isocyanate is a hexamethylene diisocyanate isocyanurate trimer blocked with 3,5-dimethylpyrazyl leaving groups. Such a preferred blocked di- and/or poly-isocyanate has the following structure:

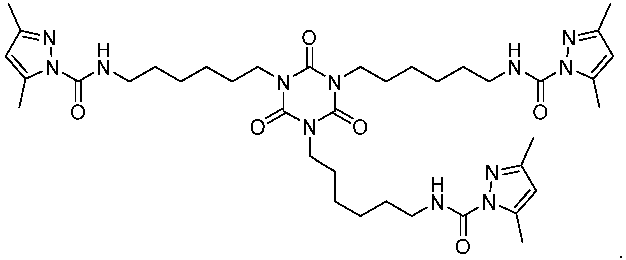

Suitable blocked di- and/or poly-isocyanates include Imprafix^{®} products commercially available from Covestro AG, Trixene^{®} products commercially available from LANXESS and Hydrosin products commercially available from Maflon S.p.A. A particularly preferred blocked polyisocyanate is Imprafix^{®} 2794, which is a water-based aliphatic blocked polyisocyanate of 38% active strength.

The cross-linking agent is preferably added to the ink in the form of an aqueous dispersion and is thus preferably a water-based dispersion. It is preferably soluble in the continuous aqueous phase of the ink.

In a preferred embodiment, the cross-linking agent dispersion is added to the ink in an amount of 0.2 to 15.0%, preferably 0.2 to 10.5%, more preferably 0.5 to 10%, more preferably 0.5 to 5.5% by weight, based on the total weight of the ink. In another preferred embodiment, the cross-linking agent dispersion is added to the ink in an amount of 0.5 to 15.0%, more preferably 2.0 to 10.0% by weight, based on the total weight of the ink. For the avoidance of doubt, the amount of cross-linking agent dispersion includes any water added as part of the cross-linking agent dispersion.

In an alternative preferred embodiment, the cross-linking agent is added to the ink during preparation of the encapsulated pigment.

Preferably, the pigment is milled in the presence of the protected cross-linking agent of the present invention and a cross-linkable polymer used to prepare the polymer coating of the encapsulated pigment, followed by addition of the cross-linking agent used to prepare the polymer coating of the encapsulated pigment, and formation of the cross-linked polymer coating of the encapsulated pigment.

Alternatively, the pigment is preferably milled in the presence of a cross-linkable polymer used to prepare the polymer coating of the encapsulated pigment, followed by addition of the protected cross-linking agent of the present invention, followed by addition of the cross-linking agent used to prepare the polymer coating of the encapsulated pigment, and formation of the cross-linked polymer coating of the encapsulated pigment.

Preferably, the two or more protected reactive groups, when deprotected, are present in the ink in an amount of 0.01 to 1.00%, preferably 0.02 to 0.80%, more preferably 0.03 to 0.60% by weight, based on the total weight of the ink. When the cross-linking agent is a blocked di- and/or poly-isocyanate, these amounts correspond to the isocyanate loading in the ink.

The two or more protected reactive groups of the cross-linking agent are only reactive to hydroxyl groups when they are deprotected, i.e. it is the two or more deprotected reactive groups that are reactive to hydroxyl groups. Deprotection typically happens after the inkjet ink is printed and dried to remove water.

The two or more protected reactive groups are preferably deprotected using heat, i.e. the cross-linking agent is preferably a cross-linking agent having two or more protected reactive groups, wherein the two or more protected reactive groups, when thermally deprotected, are reactive to hydroxyl groups.

Preferably, the two or more protected reactive groups are deprotected by heating to a temperature of 100°C or higher, preferably 120°C or higher, more preferably 135°C or higher. The maximum temperature is dictated by cost but preferably, the temperature sufficient to deprotect the two or more protected reactive groups is up to 170°C. Therefore, in a preferred embodiment, the two or more protected reactive groups are deprotected by heating to a temperature between 100°C and 170°C, preferably between 120°C and 170°C, more preferably between 135°C and 170°C. This temperature is higher than the temperature used to initially remove water, and optionally an organic solvent, from the printed ink. This allows the ink to be dried and then cured (cross-linked) in subsequent steps by applying the lower and then higher temperature, respectively.

Preferably, the printed ink is dried by heating to a temperature of less than 100 °C. In this embodiment, the printed ink needs to be heated to a temperature sufficient to dry the printed ink but preferably, the printed ink is dried by heating to a temperature of 60°C or higher. Therefore, in a preferred embodiment, the printed ink is dried by heating to a temperature between 60°C and less than 100°C.

The two or more protected reactive groups, when deprotected, are reactive to hydroxyl groups.

The two or more reactive groups can react with the hydroxyl groups of the encapsulated pigment, and/or any free hydroxyl groups on the substrate. The two or more reactive groups can also react with other pendant hydrophilic groups of the encapsulated pigment such as carboxyl groups. The two or more reactive groups of the cross-linking agent can also react with other available reactive groups on the substrate that are capable of reacting with the two or more reactive groups of the cross-linking agent. Examples of such groups include amino groups. In this way, the cross-linking agent can act as a bridge between pigment particles embedded in the substrate and between the encapsulated pigment and the substrate. Binding pigment particles together and tethering the encapsulated pigment to the substrate in this way provides good adhesion between the encapsulated pigment and the substrate, resulting in the printed image being both wash-fast and robust. The printed substrate also has a good handle and optical density.

By optical density is meant OD = - log (*I*/*I₀*), where *I₀* is the intensity of incident light on a print, and *I* is the intensity of light reflected form a print. It is the measure of darkness of a print. The higher the optical density, the darker the print.

Binder resins are typically added to pigmented inkjet inks to facilitate adhesion between the ink and substrate. However, the inclusion of a binder resin in an inkjet ink results in a printed substrate with a poor handle and a sub-optimal optical density. Therefore, the ink contains less than 5% by weight, more preferably less than 2% by weight, more preferably less than 1% by weight and most preferably is substantially free of a binder resin, where the amounts are based on the total weight of the ink.

By substantially free is meant that only small amounts will be present, for example as impurities in the components present. In other words, no binder resin is intentionally added to the ink. However, minor amounts of a binder resin, which may be present as impurities in commercially available inkjet ink components, are tolerated. For example, the ink may comprise less than 0.5% by weight, more preferably less than 0.1% by weight, most preferably less than 0.05% by weight of a binder resin, based on the total weight of the ink. In a preferred embodiment, the inkjet ink is free of a binder resin.

By binder resin is meant a polymer capable of binding pigment to a substrate without formation of covalent bonds between the polymer and pigment. The binder resin may include reactive groups that may allow self-cross-linking of the polymer as the ink dries. The polymer typically contains polymerised ethylenically unsaturated monomers optionally with reactive groups remaining for cross-linking. Suitable monomers include vinyl monomers such as (meth)acrylates, styrenes, acrylamides, vinyl ethers and halogenated vinyl compounds. Examples of binder resins include Rovene^{®} 4170 (a carboxylated self-cross-linking styrene butadiene copolymer available from Mallard Creek Polymers) and Lubrijet^{®} T340 (an acrylic emulsion copolymer binder available from Lubrizol).

Binder resins are typically prepared by emulsion polymerisation, as is known in the art. In this case, the binder resin may be provided in the form of a latex. The latex includes polymer particles dispersed in a liquid carrier. The liquid carrier is typically water, which may contain small amounts of other solvents. The liquid carrier may include additives such as agents to control the pH, for example amines. The polymer particles can be self-dispersing or the particles can be dispersed with the aid of a surfactant. Suitable surfactants include conventional surfactants such as sulphates, sulphonates, and ethylene oxide/propylene oxide copolymers. Commercially available latexes typically comprise 40 to 60% by weight of polymer, based on the total weight of the latex. For the avoidance of doubt, the restrictions on the amount of binder resin above includes any water, additives and surfactants added as part of the binder resin component.

In a preferred embodiment, the ink contains less than 2% by weight, more preferably less than 1% by weight and most preferably is substantially free of polymer capable of binding pigment to a substrate without formation of covalent bonds between the polymer and pigment, where the amounts are based on the total weight of the ink.

By substantially free is meant that only small amounts will be present, for example as impurities in the components present. In other words, no polymer capable of binding pigment to a substrate without formation of covalent bonds between the polymer and pigment is intentionally added to the ink. However, minor amounts of such a polymer, which may be present as impurities in commercially available inkjet ink components, are tolerated. For example, the ink may comprise less than 0.5% by weight, more preferably less than 0.1% by weight, most preferably less than 0.05% by weight of polymer capable of binding pigment to a substrate without formation of covalent bonds between the polymer and pigment, based on the total weight of the ink. In a preferred embodiment, the inkjet ink is free of polymer capable of binding pigment to a substrate without formation of covalent bonds between the polymer and pigment.

In the present invention, it has been found that the saturation of optical density is achieved more rapidly at lower print densities as the encapsulated pigment can penetrate the substrate more readily instead of being obscured by any binder resin. In this regard, a printed ink film containing a binder resin is confined to the surface of the substrate by the binder resin, which typically produces a rough topography and the pigment particles are enveloped in binder resin. These film properties scatter the light and have detrimental effects on the optical density. An ink containing minimal binder resin has improved wetting properties on the substrate owing to the lower amount of binder resin present in the ink, leading to deeper penetration and greater drop spread, which produces a smoother ink film topography with less scattering of light. The printed substrate therefore has good colour strength, even when using a small amount of ink.

The printed substrate prepared using the inkjet ink of the present invention also has a better handle and is softer than a comparative ink containing a binder resin instead of a cross-linking agent of the present invention.

Minimising the amount of binder resin present in the inkjet ink of the present invention also improves the breathability of the printed substrate, which is particularly important in sportswear where the inclusion of a binder resin is thought to block sweat. In this regard, the inclusion of a binder resin in an ink limits the ink film to the surface of the substrate. Moreover, when such an ink is printed onto a textile substrate, the individual fibres in the substrate can be matted together by the binder resin. As discussed above in relation to optical density, an ink containing minimal binder resin will wet the substrate more readily and penetrate more deeply into the substrate. As such, a printed textile substrate is more breathable.

In a preferred embodiment, the inkjet ink of the present invention further comprises a wax. The inclusion of a wax in the ink improves dry crock and provides a conditioning effect. Examples of suitable waxes include Hytec Wax E-6314 and Hytec E-9015 commercially available from Toho Chemical Industry Co., Ltd., Adiwax H 606 F commercially available from Lamberti S.p.A and Nopcote PEM17 commercially available from San Nopco. Preferably, the wax is an aqueous emulsion, more preferably an aqueous polyethylene and/or polypropylene emulsion, most preferably an aqueous oxidised polyethylene and/or polypropylene emulsion. Hytec Wax E-6314 is an oxidised polyethylene wax emulsion. Hytec E-9015 is an aqueous emulsion of polyethylene wax. Adiwax H 606 F is an aqueous emulsion of oxidised polyethylene and paraffines wax, which is free of nonylphenols. Nopcote PEM17 is a polyethylene wax emulsion.

Additional examples of suitable waxes include: synthetic waxes such as polyolefin wax and stearic acid amide; natural waxes such as carnauba, animal and beeswax; petroleum waxes such as paraffin and Vaseline^{®}; and mineral waxes such as montan wax.

In a preferred embodiment, the surface tension of the ink is controlled by the addition of one or more surface active materials such as commercially available surfactants. Therefore, the inkjet ink of the present invention preferably further comprises a surfactant.

Surfactants are well-known in the art and a detailed description is not required. A particularly preferred surfactant is Surfynol 440. Adjustment of the surface tension of the inks allows control of the surface wetting of the inks on various substrates. Too high a surface tension can lead to ink pooling and/or a mottled appearance in high coverage areas of the print. Too low a surface tension can lead to excessive ink bleed between different coloured inks. The surface tension is preferably in the range of 20-40 mNm⁻¹ and more preferably 30-35 mNm⁻¹.

Preferably, the surfactant is present in the inkjet ink in an amount of 0.01 to 3% by weight, based on the total weight of the ink.

In a preferred embodiment, the inkjet ink of the present invention preferably further comprises a biocide.

Biocides are well-known in the art and a detailed description is not required. Biocides prevent microbial growth in the ink. An example of a suitable biocide is Proxel GXL commercially available from Arxanda. Proxel GXL is a 20% aqueous dipropylene glycol solution of 1,2-benzisothiazolin-3-one.

Preferably, the biocide is present in the inkjet ink in an amount of 0.01 to 0.075%, more preferably 0.02 to 0.075%, most preferably 0.05 to 0.075% by weight, based on the total weight of the ink. For the avoidance of doubt, the amount of biocide includes any solvent added as part of the biocide component.

Other components of types known in the art may be present in the ink of the present invention to improve the properties or performance. These components may be, for example, pH buffers, humectants, defoamers, dispersants, synergists, stabilisers against deterioration by heat or light, reodorants, flow or slip aids, identifying tracers and viscosity modifiers.

In a preferred embodiment, the present invention provides an inkjet ink consisting of:
a continuous aqueous phase including water and optionally, an organic solvent;
a dispersed encapsulated pigment comprising pigment particles encapsulated by a cross-linked polymer coating having pendant hydrophilic groups including hydroxyl groups;
a cross-linking agent having two or more protected reactive groups, wherein the two or more protected reactive groups, when deprotected, are reactive to hydroxyl groups; and
optionally a wax, a surfactant, a biocide, a pH buffer, a humectant, a defoamer, a dispersant, a synergist, a stabiliser against deterioration by heat or light, a reodorant, a flow or slip aid, an identifying tracer, a viscosity modifier and combinations thereof.

More preferably, the present invention provides an inkjet ink consisting of:
a continuous aqueous phase including water and optionally, an organic solvent;
a dispersed encapsulated pigment comprising pigment particles encapsulated by a cross-linked polymer coating having pendant hydrophilic groups including hydroxyl groups;
a cross-linking agent having two or more protected reactive groups, wherein the two or more protected reactive groups, when deprotected, are reactive to hydroxyl groups; and
optionally a wax, a surfactant, a biocide, a viscosity modifier and combinations thereof.

In both of these embodiments, the preferred features of the inkjet ink are as discussed above, including that the pendant hydrophilic groups preferably further include carboxyl groups. And the dispersed encapsulated pigment preferably consists of pigment particles encapsulated by a cross-linked polymer coating having pendant hydrophilic groups including hydroxyl groups.

The amounts by weight provided herein are based on the total weight of the ink.

The inkjet ink may be prepared by known methods such as combining all of the components and stirring with a high-speed water-cooled stirrer, or milling on a horizontal bead-mill. The preparation of the inkjet ink of the present invention is remarkably simple. For example, one may simply use water, a commercially available encapsulated pigment dispersion, a commercially available cross-linking agent dispersion and any other additional components. The cross-linking agent dispersion may be added to the encapsulated pigment dispersion first or the cross-linking agent dispersion may be added to the encapsulated pigment dispersed in the continuous aqueous phase of the ink. Alternatively, the cross-linking agent may be added during manufacture of the encapsulated pigment as discussed above, which is in turn added to the other components of the ink.

The inkjet ink preferably exhibits a desirable low viscosity (100 mPas or less, more preferably 50 mPas or less and most preferably 35 mPas or less at 25°C). The ink most preferably has a viscosity of less than 20 mPas at 25°C. Viscosity may be measured using a rotational viscometer fitted with a thermostatically controlled cup and spindle arrangement, running at 20 rpm at 25°C.

The present invention may also provide an inkjet ink set, wherein the inkjet ink set of the invention has at least one ink that falls within the scope of the inkjet ink according to the present invention. Preferably, all of the inks in the set fall within the scope of the inkjet ink according to the present invention.

Usually, the inkjet ink set of the present invention is in the form of a multi-chromatic inkjet ink set, which typically comprises a cyan ink, a magenta ink, a yellow ink and a black ink (a so-called trichromatic set). This set is often termed CMYK. The inks in a trichromatic set can be used to produce a wide range of colours and tones.

The present invention also provides a dispersion according to claim 11.

The dispersion is used to prepare the inkjet ink of the present invention. The preferred features of the components of the inkjet ink discussed above are also preferred features of the components of the dispersion. However, the amounts of the components present in the dispersion typically differ from the amounts of the components present in the inkjet ink.

In this regard, the dispersion typically contains a higher amount of encapsulated pigment than the inkjet ink. Preferably, the dispersed encapsulated pigment is present in an amount of 8 to 20% by weight, more preferably 10 to 20% by weight, and most preferably 12 to 20% by weight, based on the total weight of the dispersion.

Further, the dispersion typically has a higher surface tension than the inkjet ink. Preferably, the dispersion has a surface tension of 50 mNm⁻¹ or higher.

The present invention also provides a method of inkjet printing comprising the following steps in order:
(i) providing an inkjet ink of the present invention;
(ii) inkjet printing the inkjet ink onto a substrate to provide a printed substrate;
(iii) drying the printed substrate to remove water; and
(iv) deprotecting the two or more protected reactive groups.

The method of the present invention is a method of inkjet printing.

For high-speed printing, the inks must flow rapidly from the printing heads, and, to ensure that this happens, they must have in use a low viscosity, typically 200 mPas or less at 25°C, although in most applications the viscosity should be 50 mPas or less, and often 25 mPas or less. Typically, when ejected through the nozzles, the ink has a viscosity of less than 25 mPas, preferably 3-15 mPas and most preferably between 4-11 mPas at the jetting temperature, which is often elevated to, but not limited to 30-50°C (the ink might have a much higher viscosity at ambient temperature). The inks must also be resistant to drying or crusting in the reservoirs or nozzles. For these reasons, inkjet inks for application at or near ambient temperatures are commonly formulated to contain a large proportion of a mobile liquid vehicle or solvent such as water or another solvent or mixture of solvents.

The method of the present invention comprises (i) providing an inkjet ink of the present invention.

In inkjet printing, minute droplets of black, white or coloured ink are ejected in a controlled manner from one or more reservoirs or printing heads through narrow nozzles on to a substrate, which is moving relative to the reservoirs. The ejected ink forms an image on the substrate.

The inkjet ink used in the method of the present invention is the inkjet ink of the present invention as described above. The preferred inkjet ink used in the method of the present invention is as described above for the inkjet ink of the present invention.

The method of the present invention further comprises (ii) inkjet printing the inkjet ink onto a substrate to provide a printed substrate.

The printing is performed by inkjet printing, e.g. on a single-pass inkjet printer, for example for printing (directly) onto a substrate, or a multiple-pass printer where the image is built up in print swathes. Inkjet printing is well-known in the art.

The ink is jetted from one or more reservoirs or printing heads through narrow nozzles onto a substrate to provide a printed substrate.

In order to produce a high quality printed image a small jetted drop size is desirable. Preferably the inkjet ink is jetted at drop sizes below 90 picolitres, preferably below 35 picolitres and most preferably below 10 picolitres.

The inkjet ink of the present invention is compatible with print heads that are capable of jetting drop sizes of 90 picolitres or less because of its low viscosity.

Print heads account for a significant portion of the cost of an entry level printer and it is therefore desirable to keep the number of print heads (and therefore the number of inks in the ink set) low. Reducing the number of print heads can reduce print quality and productivity. It is therefore desirable to balance the number of print heads in order to minimise cost without compromising print quality and productivity.

The substrate can be any substrate suitable for printing. Textile substrates are particularly preferred including treated and untreated textile substrates. Suitable textile substrates include cotton, jersey, silk, rayon, wool, polyester and nylon.

Jersey is a stretchable, close-knit fabric having a latticework of twisted vertical yarns connected by untwisted horizontal yarns. Jersey is composed of natural fibres such as wool (animal-derived) or cotton (plant-derived), both of which can be optionally blended with synthetic fibres such as polyester or rayon.

The ink of the present invention is suitable for printing onto a wider range of textile substrates than typical inks containing a binder resin. In particular, the ink of the present invention is suitable for printing onto stretchable textile substrates such as jersey. Inks containing a binder resin typically adhere poorly to stretchable textile substrates as the ink film is confined to the surface and only physically embedded in the substrate. In contrast, the strong covalent bonds formed between the encapsulated pigment and the substrate in the present invention and the deep penetration of the ink film into the substrate means that stretchable textile substrates can be printed onto successfully.

In a preferred embodiment, the substrate is a textile substrate, wherein the textile substrate is composed of a polymeric material having reactive groups which are available to react with the two or more protected reactive groups of the cross-linking agent, when deprotected, preferably wherein the textile substrate comprises a cellulosic material. More preferably, the substrate is a textile substrate, wherein the textile substrate is composed of a polymeric material having free hydroxyl groups at the surface of the substrate. Cellulosic textile substrates are particularly preferred. Examples of cellulosic textile materials include cotton and jersey. Printing onto such textile substrates provides a printed substrate with particularly advantageous properties.

Once the two or more protected reactive groups are deprotected, the cross-linking agent is able to react with the hydroxyl groups on the encapsulated pigment and the reactive groups of the textile substrate, including any free hydroxy groups at the surface of the substrate. The cross-linking agent therefore tethers the encapsulated pigment to the textile substrate, providing good adhesion between the encapsulated pigment and the textile substrate. The encapsulated pigment particles also embed in the substrate and the cross-linking agent cross-links the encapsulated pigment particles together, increasing the density of the ink film. These cross-linking reactions results in the printed image being both wash-fast and robust.

Suitable substrates include silk, cotton, rayon, wool, polyester and/or nylon. Preferred substrates comprise silk and/or cotton. Silk may contain amino groups which can react with the two or more reactive groups of the cross-linking agent. A particularly preferred substrate comprises cotton and more preferably is jersey. Jersey composed of natural fibres is preferred. Natural fibres have the ability to decompose meaning jersey composed of natural fibres is more environmentally friendly. A particularly preferred jersey substrate is composed of 95% cotton and 5% Lycra^{®}. The ink of the present invention adheres particularly well to this stretch jersey leading to wash-fast printed substrates.

If there are no free reactive groups on the substrate, the two or more protected reactive groups of the cross-linking agent, when deprotected, can still react with the hydroxyl groups of the encapsulated pigment and cross-link the encapsulated pigment, so that a cross-linked film of the ink is formed on the substrate. Such a printed substrate would still have a good handle and optical density, even if the adhesion between the encapsulated pigment and the substrate is not optimal. However, substrates with no free reactive groups may need to be pre-treated prior to printing so that sufficient bonding to the substrate is achieved.

It is standard practice to use a pre-treat (also known as a primer) on a textile substrate to enhance wash- and crock-fastness of the printed ink. Pre- and post-treats are also commonly applied to enhance the handle, image and colour quality of the prints. Post-treats typically involve steaming, washing, drying and/or heating steps. Preferably, the method of the present invention does not use pre- or post-treats. It is surprising that the method of the present invention can provide printed images with a high quality handle, image and colour without resorting to pre- or post-treats. The fact that the method of the present invention does not require any additional pre- or post-treatment steps means that it is also simpler, quicker, cheaper and more environmentally friendly than other methods using dye-based inkjet inks.

When discussing the substrate, it is the surface which is most important, since it is the surface which is wetted by the ink. Thus, at least the surface of substrate is composed of the above-discussed material.

The method of the present invention further comprises (iii) drying the printed substrate to remove water.

By drying, it is meant the removal of the water (and optional organic solvent) by evaporation. Evaporation of the water can occur simply by exposure of the inks to the atmosphere, but the ink may also be heated to accelerate evaporation. If the ink is heated to accelerate evaporation, the ink is preferably heated to a temperature of less than 100 °C. The minimum temperature is less critical but if the ink is heated to accelerate evaporation, the printed ink is preferably heated to a temperature of 60°C or higher. Therefore, in a preferred embodiment, the printed ink is heated to a temperature between 60°C and less than 100°C.

Drying the printed substrate to remove water occurs before the two or more reactive groups are deprotected in order to minimise the two or more reactive groups reacting with water.

The method of the present invention further comprises (iv) deprotecting the two or more protected reactive groups. Deprotecting the two or more protected reactive groups can be done by any means. The means of deprotection depends on the nature and reactivity of the two or more protected reactive groups. Preferably however, the two or more protected reactive groups are reactive to hydroxyl groups when thermally deprotected, and deprotecting the two or more protected reactive groups is by heating the printed substrate to a temperature sufficient to deprotect the two or more protected reactive groups.

Therefore, the present invention preferably provides a method of inkjet printing comprising the following steps in order:
(i) providing an inkjet ink comprising: a continuous aqueous phase; a dispersed encapsulated pigment comprising pigment particles encapsulated by a cross-linked polymer coating having pendant hydrophilic groups including hydroxyl groups; and a cross-linking agent having two or more protected reactive groups, wherein the two or more protected reactive groups, when thermally deprotected, are reactive to hydroxyl groups;
(ii) inkjet printing the inkjet ink onto a substrate to provide a printed substrate;
(iii) drying the printed substrate to remove water; and
(iv) heating the printed substrate to a temperature sufficient to deprotect the two or more protected reactive groups.

In a particularly preferred embodiment, the present invention preferably provides a method of inkjet printing comprising the following steps in order:
(i) providing an inkjet ink comprising: a continuous aqueous phase; a dispersed encapsulated pigment consisting of pigment particles encapsulated by a cross-linked polymer coating having pendant hydrophilic groups including hydroxyl groups; and a cross-linking agent having two or more protected reactive groups, wherein the two or more protected reactive groups, when thermally deprotected, are reactive to hydroxyl groups;
(ii) inkjet printing the inkjet ink onto a substrate to provide a printed substrate;
(iii) drying the printed substrate to remove water; and
(iv) heating the printed substrate to a temperature sufficient to deprotect the two or more protected reactive groups.

The temperature is selected based on the cross-linking agent used and what temperature is required to deprotect the two or more protected reactive groups. For example, the blocked isocyanate groups of Imprafix^{®} 2794 are deprotected at a temperature of 135°C. Preferably, the temperature sufficient to deprotect the two or more protected reactive groups is 100°C or higher, more preferably 120°C or higher and most preferably 135°C or higher. The maximum temperature is dictated by cost but preferably, the temperature sufficient to deprotect the two or more protected reactive groups is up to 170°C.

The printed substrate is preferably heated to a temperature sufficient to deprotect the two or more protected reactive groups from 30 seconds to 10 minutes, more preferably from 1 to 7 minutes.

In this step, the two or more protected reactive groups of the cross-linking agent are deprotected. The reactive groups can then react with the hydroxyl groups of the encapsulated pigment and any free hydroxyl groups on the substrate, thereby binding pigment particles together and tethering the encapsulated pigment to the substrate. These cross-linking reactions provide good adhesion between the encapsulated pigment and the substrate, resulting in the printed image being both wash-fast and robust.

The present invention also provides a printed substrate having the inkjet ink as defined herein printed thereon. The present invention further provides a printed substrate obtainable by the method of the present invention. Preferred substrates are those given above. As discussed above, the printed substrate has a good handle and optical density, without compromising the wash-fastness and robustness of the printed substrate. The printed substrate therefore has superior properties than achieved using other pigmented inkjet inks. It is surprising that these properties can be achieved without requiring a binder resin.

The invention will now be described with reference to the following examples, which are not intended to be limiting.

### Examples

### Example 1

### Preparation of cross-linkable polymers 1-3 used to prepare encapsulated pigment dispersions of the invention

Cross-linkable polymers 1-3 were prepared using the components set out in Table 1. The amounts of the components are given in grams.

**Table 1**

| **Component** | **Amount used for cross-linkable polymer 1 (g)** | **Amount used for cross-linkable polymer 2 (g)** | **Amount used for cross-linkable polymer 3 (g)** |
|---|---|---|---|
| HPMA | - | 14.38 | - |
| HEMA | - | - | 13.03 |
| MAA | 51.97 | 30.45 | 30.47 |
| BzMA | 189.73 | 196.86 | 198.30 |
| Chain transfer agent (CTA) | 1.56 | 4.97 | 5.00 |
| Dipropylene glycol (DPG) for monomer/CTA feed | 88.20 | 89.30 | 89.50 |
| Initiator | 4.28 | 3.91 | 3.93 |
| DPG for initiator feed | 52.70 | 53.40 | 53.50 |
| DPG for initial reactor charge | 230.00 | 232.80 | 233.30 |

HPMA, HEMA, BzMA and MAA are monomers. Specifically, HPMA is 2-hydroxypropyl methacrylate. HEMA is 2-hydroxyethyl methacrylate. BzMA is benzyl methacrylate. MAA is methacrylic acid. The chain transfer agent (CTA) is butyl 3-mercaptopropionate. The initiator is t-butylperoxy 2-ethylhexanaote. Dipropylene glycol (DPG) is a solvent.

For each cross-linkable polymer, the monomers and chain transfer agent were mixed. Each mixture was then dissolved in dipropylene glycol to provide a solution used as the monomer/CTA feed.

For each cross-linkable polymer, the initiator was dissolved in dipropylene glycol to provide a solution used as the initiator feed.

In a reaction flask, dipropylene glycol was either warmed to a temperature of 85°C for the preparation of cross-linkable polymer 1 or 93°C for the preparation of cross-linkable polymers 2 and 3, and purged with nitrogen gas. Whilst stirring, the corresponding monomer/CTA and initiator feeds were added over 4 and 5 hours, respectively, by pumping the solutions into the reaction flask. The nitrogen gas atmosphere was maintained throughout. The temperature was maintained at either 85°C or 93°C (±1 °C) throughout. On completion of the feeds, the flask contents were stirred for a further two hours at either 85°C or 93°C. These steps copolymerised the monomers to prepare cross-linkable polymers 1-3, each in the form of a 40% by weight solution of cross-linkable polymer in dipropylene glycol, based on the total weight of the cross-linkable polymer solution.

Cross-linkable polymers 1-3 were acrylic copolymers having the properties shown in Tables 2 and 3.

**Table 2**

| **Cross-linkable polymer** | **Number average molecular weight (Dalton)** | **Weight average molecular weight (Dalton)** | **Polydispersity index** |
|---|---|---|---|
| 1 | 43,714 | 61,165 | 1.40 |
| 2 | 21,778 | 29,810 | 1.37 |
| 3 | 21,335 | 29,579 | 1.39 |

The molecular weights were determined using gel permeation chromatography (GPC) and measurements were performed on an Agilent GPC50 system fitted with two PL-Gel Mixed D columns (300 x 7.5 mm) and a RI detector; using DMF (containing 1 wt% of each of acetic acid and trimethylamine) as the eluent with a flow rate of 1.0 mL/min. The number average and weight average molecular weights were determined by comparison to polystyrene standards.

**Table 3**

| **Cross-linkable polymer** | **Acid value** | **Repeat units** |
|---|---|---|
| 1 | 2.5 mmol of acid groups per gram of cross-linkable polymer | Benzyl methacrylate and methacrylic acid in the proportions 78.5:21.5 by weight, respectively |
| 2 | 1.41 mmol of acid groups per gram of cross-linkable polymer | Benzyl methacrylate, methacrylic acid and 2-hydroxypropyl methacrylate in the proportions 84.45:12.6:5.95 by weight, respectively |
| 3 | 1.41 mmol of acid groups per gram of cross-linkable polymer | Benzyl methacrylate, methacrylic acid and 2-hydroxyethyl methacrylate in the proportions 82.01:12.6:5.39 by weight, respectively |

### Neutralisation of cross-linkable polymers 1-3 to prepare cross-linkable polymer solutions 1-3

Cross-linkable polymer solutions 1-3 were prepared using cross-linkable polymers 1-3, respectively.

Cross-linkable polymer 1 (625 g) was neutralised by the addition of a solution containing 50% aqueous potassium hydroxide (56.11 g) and water (223.84 g) to provide a solids content of 31% by weight. Cross-linkable polymers 2 and 3 (625 g) were neutralised by the addition of a solution containing 50% aqueous potassium hydroxide (31.65 g) and water (109.24 g) to provide a solids content of 35% by weight, based on the total weight of the cross-linkable polymer solution.

Cross-linkable polymer solutions 1-3 had the properties shown in Table 4.

**Table 4**

| **Cross-linkable polymer solution** | **pH** | **Approximate amount of cross-linkable polymer contained (%)** |
|---|---|---|
| 1 | 8.0 to 9.0 | 31 |
| 2 | 8.0 to 9.0 | 35 |
| 3 | 8.0 to 9.0 | 35 |

### Preparation of black mill-bases 1-4

Black mill-bases 1 and 2 were prepared using cross-linkable polymer solutions 1 and 2, respectively. Black mill-base 3 was prepared using cross-linkable polymer solution 1. Black mill-base 4 was prepared using cross-linkable polymer solution 3.

For black mill-base 1, pigment powder (90 parts of NIPex^{™} 170IQ Carbon Black pigment, ex Degussa) and cross-linkable polymer solution 1 (116 parts) were mixed together to form a premixture. For black mill bases 2-4, pigment powder (90 parts of NIPex^{™} 170IQ Carbon Black pigment, ex Degussa) and a cross-linkable polymer solution (103 parts) were mixed together to form a premixture. Water was in some cases added to the premixture as appropriate to provide a suitable viscosity for mixing and milling.

For black mill-bases 1, 2 and 4, the premixture was thoroughly mixed together using a Silverson^{™} mixer for 30 minutes. For black mill-base 3, the premixture was thoroughly mixed together using a Silverson^{™} mixer for 25 minutes, Imprafix^{®} 2794 (0.192 parts) added, and mixed for a further five minutes.

Imprafix^{®} 2794 is a cross-linking agent of the invention. It is a water-based aliphatic blocked polyisocyanate of 38% active strength.

After mixing, the mixture was transferred to a horizontal bead mill containing 1 mm beads. The mixture was then milled until the desired Z-average particle size was achieved.

The milled mixture was then removed from the horizontal bead mill, and the milled mixture was adjusted to 10% by weight of pigment by the addition of pure water. This resulted in a black mill-base.

Black mill-bases 1-4 had the Z-average particle sizes shown in Table 5, measured using a Malvern Zetasizer^{™}.

**Table 5**

| **Black mill-base** | **Contains cross-linkable polymer solution** | **Contains Imprafix^{®} 2794?** | **Z-average particle size (nm)** |
|---|---|---|---|
| 1 | 1 | No | 119 |
| 2 | 2 | No | 118 |
| 3 | 1 | Yes | 115 |
| 4 | 3 | No | 113 |

### Cross-linking the cross-linkable polymer solutions in black mill-bases 1-4 to prepare encapsulated pigment dispersions of the invention

Encapsulated black pigment dispersions B-E were prepared using black mill-bases 2, 3, 1 and 4, respectively, and the other components set out in Table 6. The amounts of the components are given in parts by weight, based on the total weight of the dispersion.

**Table 6**

| **Encapsulated black pigment dispersion** | **Contains black mill-base** | **Imprafix^{®} 2794 (parts)** | **Mill-base (parts)** | **Trimethylol pr opane polyglycidyl ether (parts)** | **Boric acid (parts)** |
|---|---|---|---|---|---|
| B | 2 | 0.192 | 456 | 2.07 | 0.9 |
| C* | 3 | 0.192* | 410 | 5.02 | 2.2 |
| D | 1 | 0.192 | 410 | 5.02 | 2.2 |
| E | 4 | - | 456 | 2.07 | 0.9 |

| | | | | | |
|---|---|---|---|---|---|
| *Imprafix^{®} 2794 added during preparation of mill-base 3 | | | | | |

Imprafix^{®} 2794 is a water-based aliphatic blocked polyisocyanate of 38% active strength. It is a cross-linking agent of the invention. Trimethylolpropane polyglycidyl ether is a cross-linking agent used to prepare encapsulated pigment dispersions of the invention. It is commercially available as Denacol EX-321 obtained from Nagase ChemteX, with weight per epoxy = 140, hereafter abbreviated as EX-321. Boric acid is used as a buffer. It was obtained from Aldrich.

For encapsulated pigment dispersions B and D, the black mill-base was heated to 70°C and stirred for 30 minutes. Imprafix^{®} 2794 was added and the mixture was stirred for another 30 minutes.

For encapsulated pigment dispersions C and E, the black mill-bases were used directly in the cross-linking reaction as described below.

The cross-linkable polymer solutions in each of the mill-bases were then cross-linked using trimethylolpropane polyglycidyl ether. The cross-linking reaction was controlled by the presence of boric acid.

The cross-linking reaction was effected by heating the mixtures to a temperature of 70°C for a duration of six hours. This reaction cross-linked the carboxylic acid groups in the cross-linkable polymer and thereby encapsulated the pigment.

### Ultrafiltration

The final stage in obtaining the encapsulated pigment dispersions of the invention is concentration to the desired pigment strength using membrane ultrafiltration. Each encapsulated black pigment dispersion was purified by means of ultrafiltration using membrane having a 0.1 micron pore size.

Each encapsulated black pigment dispersion was diafiltered with approximately 10 to 40 wash volumes of pure deionized water per 1 volume of the encapsulated black pigment dispersion. The ultrafiltration membrane was then used to concentrate the encapsulated black pigment dispersion back to a solids content of around 13 to 15% by weight, based on the total weight of the dispersion.

The concentration (or de-watering) was carried out until the pigment strength was slightly higher than (by from 1 to 3% by weight, based on the total weight of the dispersion) the desired final strength. Once the pigment content had reached 16% to 17% by weight, based on the total weight of the dispersion, the dispersion was drained from the membrane ultrafiltration equipment and then adjusted to the final strength target by the addition of demineralised water.

### Preparation of inkjet inks

Inkjet inks were prepared according to the formulations set out in Table 7. The inkjet ink formulations were prepared by mixing the components in the given amounts and filtering them through two 1 µm glass fibre filters from Whatman^{®}. For Inks E.1 and E.2, additional Imprafix^{®} 2794 was added as the final component of the ink prior to filtration. For Ink E.6, Imprafix^{®} 2794 was added as the final component of the ink prior to filtration. Amounts are given as weight percentages based on the total weight of the inks.

**Table 7**

| **Component** | **Ink A** | **Ink B** | **Ink C** | **Ink D** | **Ink E.1** | **Ink E.2** | **Ink E.3** | **Ink E.4** | **Ink E.5** | **Ink E.6** |
|---|---|---|---|---|---|---|---|---|---|---|
| Pro-Jet^{®} APD 1000 black dispersion | 28.60 | - | 28.60 | - | - | - | - | - | - | - |
| Pro-Jet^{®} APD 1000 magenta dispersion | - | 35.70 | - | - | - | - | - | - | - | - |
| Pro-Jet APD1000 black dispersion with added Imprafix^{®} 2794 | - | - | - | 28.70 | - | - | - | - | - | - |
| Encapsulated black pigment dispersion A | - | - | - | - | 28.25 | 28.25 | - | - | - | - |
| Encapsulated black pigment dispersion B | - | - | - | - | - | - | 28.25 | - | - | - |
| Encapsulated black pigment dispersion C | - | - | - | - | - | - | - | 28.70 | - | - |
| Encapsulated black pigment dispersion D | - | - | - | - | - | - | - | - | 28.70 | - |
| Encapsulated black pigment dispersion E | - | - | - | - | - | - | - | - | - | 28.25 |
| Triethylene glycol | 10.00 | 10.00 | 10.00 | 10.00 | 10.00 | 10.00 | 10.00 | 10.00 | 10.00 | 10.00 |
| Glycerol | 24.00 | 20.00 | 24.00 | 24.00 | 24.00 | 24.00 | 24.00 | 24.00 | 24.00 | 24.00 |
| Surfynol^{®} 440 | 0.35 | 0.40 | 0.13 | 0.13 | 0.13 | 0.13 | 0.13 | 0.13 | 0.13 | 0.13 |
| Proxel^{®} GXL | 0.075 | 0.075 | 0.075 | 0.075 | 0.075 | 0.075 | 0.075 | 0.075 | 0.075 | 0.075 |
| Snowtex XS | 0.245 | 0.25 | - | - | - | - | - | - | - | - |
| Water | 21.73 | 13.84 | 37.20 | 37.10 | 36.70 | 36.05 | 37.55 | 37.10 | 37.10 | 37.10 |
| Rovene^{®} 4170 | 15.00 | - | - | - | - | - | - | - | - | - |
| Lubrijet^{®} T340 | - | 19.74 | - | - | - | - | - | - | - | - |
| Imprafix^{®} 2794 | - | - | - | - | 0.85 | 1.50 | - | - | - | 1.50 |

Pro-Jet^{®} APD 1000 black and magenta dispersions are encapsulated pigments according to the invention, which are commercially available from FUJIFILM Imaging Colorants Limited.

Pro-Jet APD1000 black dispersion with added Imprafix^{®} 2794 was added to Ink D in a total amount of 28.70% by weight, based on the total weight of the ink. In terms of Pro-Jet APD1000 black dispersion and Imprafix^{®} 2794 per se, Ink D contains 27.90% by weight of Pro-Jet APD1000 black dispersion and 0.80% by weight of Imprafix^{®} 2794 (equivalent to 0.30% by weight of cross-linking agent as Imprafix^{®} 2794 is 38% active strength), where the amounts are based on the total weight of the ink. Imprafix^{®} 2794 was added to the Pro-Jet APD1000 black dispersion in the final stage of the dispersion making process.

The addition of Imprafix^{®} 2794 for Ink D was carried out during the ultrafiltration step described above after the dispersion had been removed from the membrane equipment and just prior to the final dilution with demineralised water, whereby the water charge was adjusted accordingly in order that the final pigment strength was 15.0% by weight, based on the total weight of the dispersion.

Encapsulated black pigment dispersion A is an encapsulated pigment dispersion of the invention, wherein the cross-linked polymer coating having pendant hydrophilic groups including hydroxyl groups is prepared using three monomers, which are polymerised and subsequently cross-linked with an epoxide. The third monomer has hydroxyl groups and introduces additional hydroxyl groups into the encapsulated pigment dispersion.

Encapsulated black pigment dispersion B is an encapsulated pigment dispersion of the invention prepared using cross-linkable polymer 2 having additional secondary hydroxyl groups (third monomer = HPMA) and with Imprafix^{®} 2794 added at the cross-linking stage.

Encapsulated black pigment dispersion C is an encapsulated pigment dispersion of the invention prepared using cross-linkable polymer 1 with Imprafix^{®} 2794 added during the milling stage (no additional hydroxyl groups are present in the cross-linkable polymer).

Encapsulated black pigment dispersion D is an encapsulated pigment dispersion of the invention prepared using cross-linkable polymer 1 with Imprafix^{®} 2794 added at the cross-linking stage (no additional hydroxyl groups are present in the cross-linkable polymer).

Encapsulated black pigment dispersion E is an encapsulated pigment dispersion of the invention prepared using cross-linkable polymer 3 having additional primary hydroxyl groups (third monomer = HEMA). Imprafix^{®} 2794 is added subsequently when formulating the ink.

Triethylene glycol and glycerol are organic solvents. Surfynol^{®} 440 is a surfactant commercially available from Evonik. Proxel^{®} GXL is a biocide commercially available from Arxanda. Snowtex XS is a colloidal silica commercially available from Nissan Chemical. Rovene^{®} 4170 is a carboxylated self-cross-linking styrene butadiene copolymer binder resin commercially available from Mallard Creek. Lubrijet^{®} T340 is an acrylic emulsion copolymer binder resin commercially available from Lubrizol. Imprafix^{®} 2794 is a cross-linking agent according to the invention and specifically a water-based aliphatic blocked polyisocyanate commercially available from Covestro.

Inks A and B contain a binder resin instead of a cross-linking agent of the invention and so are comparative inks. Ink C contains no binder resin or cross-linking agent of the invention and so is also a comparative ink. Inks D and E.1-E.6 contain a cross-linking agent of the invention and are inks of the invention.

### Test 1

Inks A, D and E.2 were assessed for handle/softness.

Inks A, D and E.2 were drawn down onto treated cotton (Premier coating 6798) in 40 µm films using 40 µm wires wound K-bars.

The inks were heated by placing the printed ink films in a pre-heated oven for 30 minutes at a temperature of 70°C.

The inks were then heated (cured) in a hot-press either for two minutes at 180°C (Ink A) or seven minutes at 150°C (Inks D and E.2). The conditions used were dependent on the components of the ink but in each case, the conditions used were sufficient to fully dry/cure the ink.

For Inks D and E.2, the conditions used were sufficient to deprotect the blocked polyisocyanate cross-linking agent to provide a polyisocyanate, which was then able to react with the hydroxyl groups of the encapsulated pigment and the hydroxyl groups of the cotton substrate. In this way, the cross-linking agent bound the pigment particles together and tethered the encapsulated pigment to the substrate. These cross-linking reactions do not happen for Ink A, in which a binder resin is present instead of a cross-linking agent of the invention.

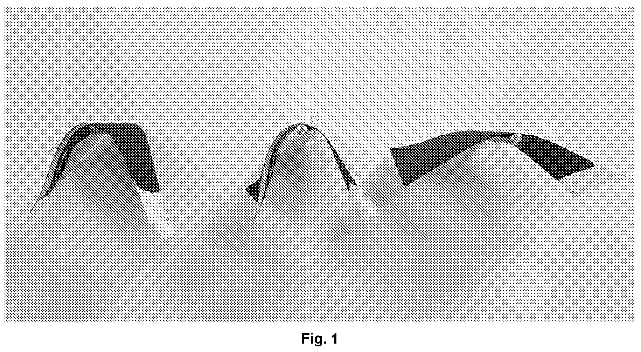

The handle/softness of the cured ink films was assessed by hanging them over a horizontal metal peg as shown in the photograph of Fig. 1. The cured ink films of Inks D and E.2 are shown on the left and in the middle of Fig. 1, respectively, curved around the peg. The cured ink film of Ink A is shown on the right of Fig. 1 balanced on the peg. Inks D and E.2 of the invention therefore provide a better handle and softer printed substrates than comparative Ink A.

### Test 2

Inks A, B, D and E.2 were assessed for handle/softness.

Inks A, B, D and E.2 were drawn down in 40 µm films using 40 µm wires wound K-bars onto transfer paper (cold-peel PET film suitable for water-based systems). The wetted transfer paper was pressed onto an untreated (Premier) cotton substrate. The inks were heated by placing the printed ink films in a pre-heated oven for 15 minutes at a temperature of 70°C. The draw down and heating steps were repeated a further two times to form three layer draw-downs.

The inks were then heated (cured) in a hot-press either for one minute at 180°C (Inks A and B), or seven minutes at 150°C (Inks D and E.2). As for Test 1, the conditions varied depending on the components of the ink but in each case, the conditions used were sufficient to fully dry/cure the ink.

19/20 people also said that the cured ink film of Ink E.2 was softer than the cured ink film of Ink A.

19/20 people said that the cured ink film of Ink D was softer than the cured ink film of Ink B.

### Test 3

Inks A and D were assessed for wash-fastness and handle/softness. The inks were printed on a rig with a piezo GH2220 head. Large drop mode was selected to print density blocks. The inks were heated and cured as in Test 2.

The optical density and L*a*b* coordinates (CIELAB) of the cured inks films were measured with a spectrophotometer (X-rite Exact). Optical density and L* (luminance) are a measure of darkness. The higher the optical density, the darker the print. In contrast, the lower the L*, the darker the print.

The cured ink films were then loaded in a washing machine with 1 kg of polyester sheets and washed for 140 minutes at a temperature of 60°C with 50 g of Persil^{®} non-biological washing powder. The optical density and L*a*b* coordinates (CIELAB) of the washed inks films were measured again. This process was repeated a further three times.

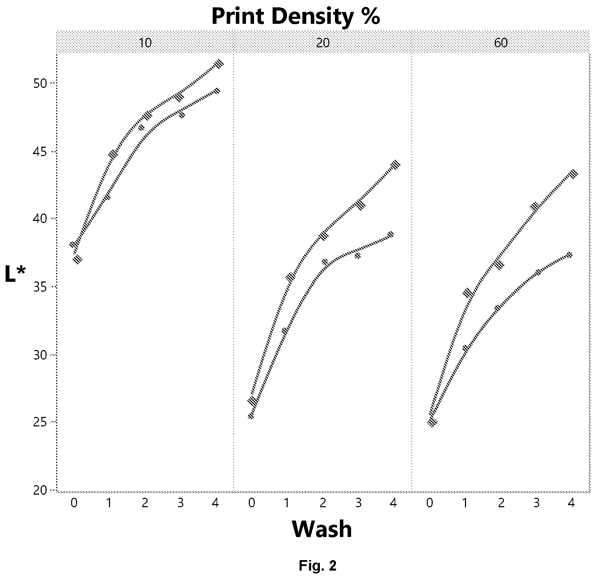

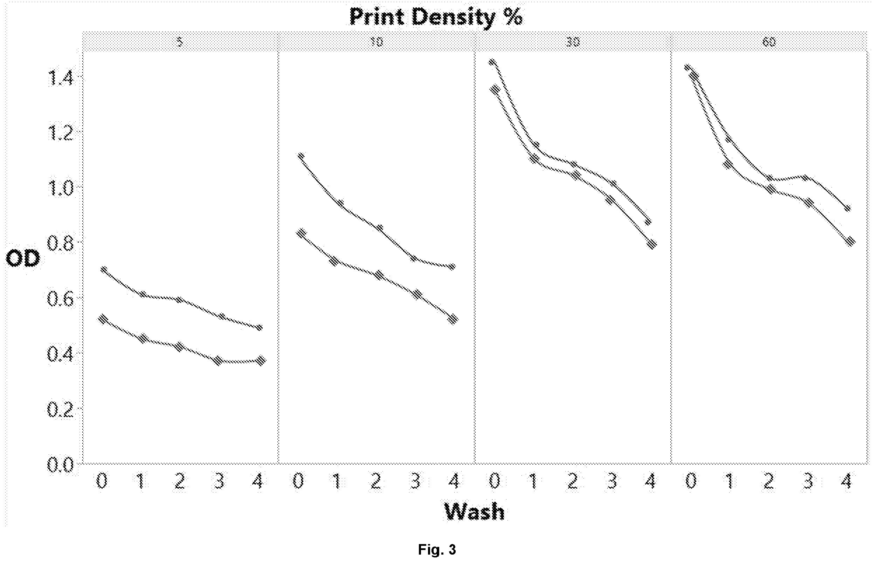

The results are set out in Figs 2 and 3. Ink A corresponds to the line with squares and Ink D corresponds to the line with circles.

As can be seen in Figs 2 and 3, the L* and optical density values per wash are superior (lower L*, higher optical density) for Ink D compared with Ink A for prints with densities of ≤60%.

Inks A and D have similar L* values for print densities of ≤60%, as illustrated at zero washes in Fig. 2. However, as the number of washes increases, Ink D clearly maintains a superior L* value compared to Ink A.

Ink D has higher optical density values than Ink A for print densities of ≤60%, as illustrated at zero washes in Fig. 3. The optical density/wash plot gradients for Inks A and D are similar. However, the optical density value per wash remains noticeably higher for Ink D compared with Ink A.

29/30 people also said that the cured ink film of Ink D was softer than the cured ink film of Ink A.

Therefore, the ink of the present invention has improved wash-fastness and handle/softness.

### Test 4

Inks A, C, E.1 and E.2 were assessed for wash-fastness. The inks were transferred to untreated cotton using the same transfer method, heating and curing conditions given in Test 2. All of these inks were applied to the substrate using a single transfer layer.

The cured inks were photographed, washed once as in Test 3, photographed again, washed a further four times (total five washes) as in Test 3, photographed again, washed a further five times (total ten washes) as in Test 3 and photographed again.

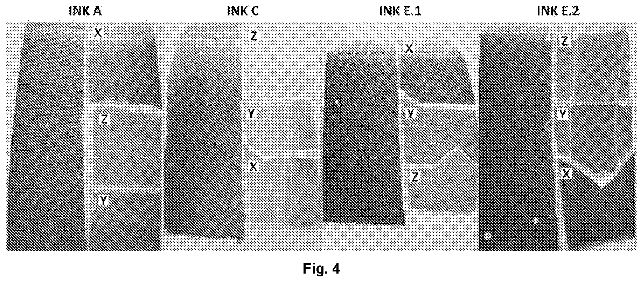

The results are shown in the photographs in Fig. 4. For each ink, the large piece of cloth on the left-hand side corresponds to the unwashed ink, position X corresponds to the ink after one wash, position Y corresponds to the ink after five washes and position Z corresponds to the ink after ten washes.

As can be seen in Fig. 4, Inks E.1 and E.2 have equivalent or superior wash-fastness compared with Ink A for all washes. Ink C containing neither binder resin nor cross-linking agent of the invention has very poor wash-fastness.

### Test 5

Inks A and D were assessed for colour. The inks were printed on a rig with a piezo GH2220 head. Large drop mode was selected to print density blocks. The inks were heated and cured as in Test 2.

The optical density of the cured inks films was measured as in Test 3.

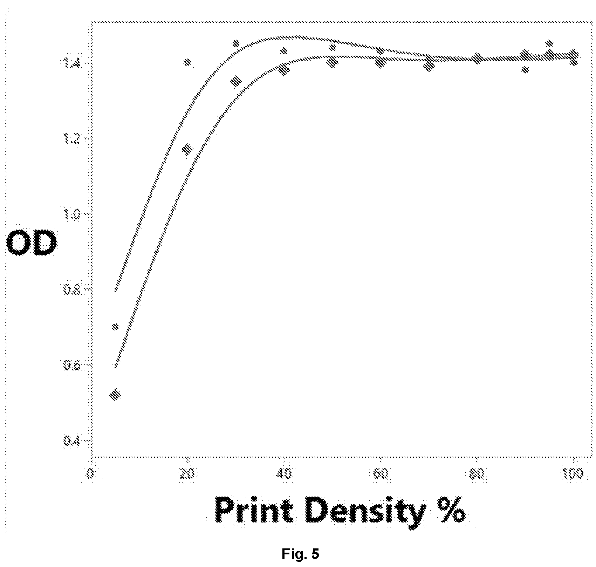

The results are set out in Fig. 5. Ink A corresponds to the line with squares and Ink D corresponds to the line with circles.

As can be seen in Fig. 5, Ink D has superior optical density compared with Ink A for print densities of ≤60%. Ink D offers particularly strong optical density values for print densities of ≤40%. Inks A and D saturate around the same optical density value.

### Test 6

Inks A and D were printed on a rig with a piezo GH2220 head. Large drop mode was selected to print density blocks. The inks were heated and cured as in Test 2.

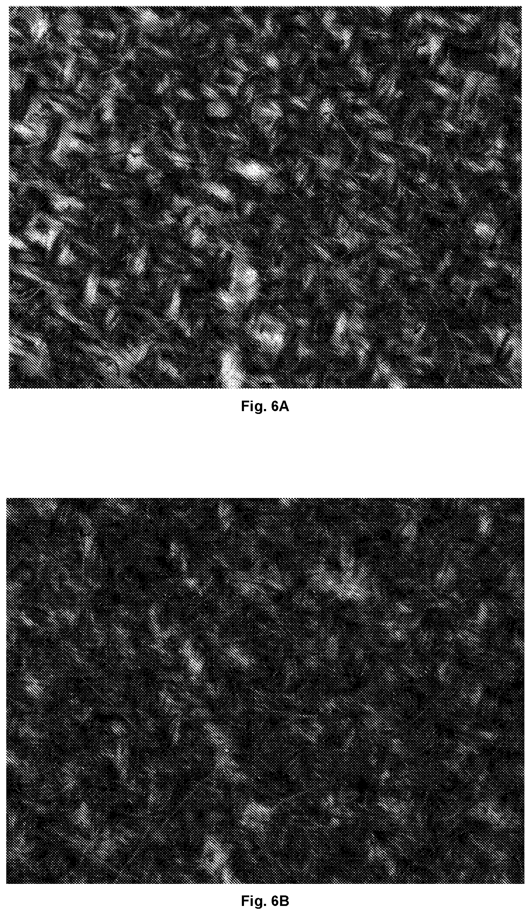

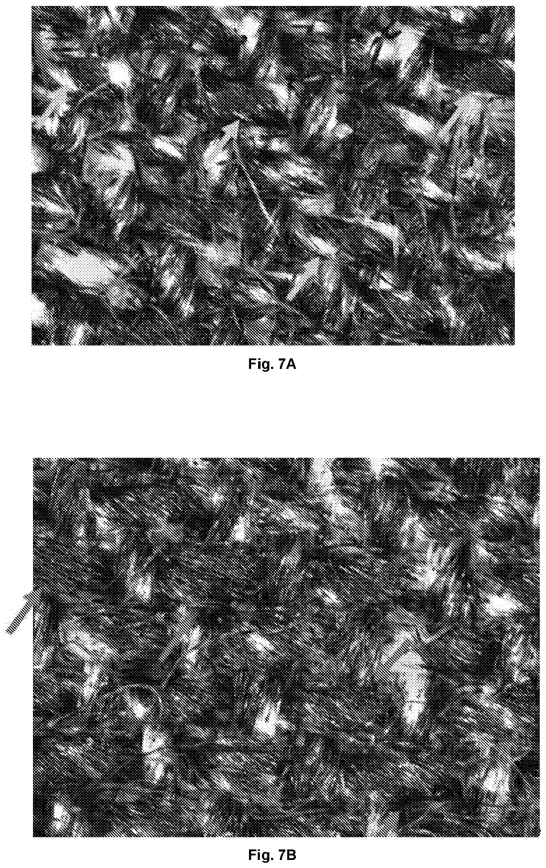

The 10% density prints were imaged using optical microscopy (Zeiss Smartzoom 5) at x90 and x150 magnification. The results for x90 magnification are shown in Figs 6A (Ink A) and 6B (Ink D). The results for x150 magnification are shown in Figs 7A (Ink A) and 7B (Ink D).

The micrographs up to a print density of 60% showed differences between Inks A and D. This difference was particularly apparent at densities ≤ 30%. As can be seen in Figs 6A and 6B at 10% print density, Ink D had much less white in the images compared with Ink A.

Figs 7A and 7B are higher magnification images of the 10% density prints from Figs 6A and 6B, respectively.

The arrows in Fig. 7A point to fibres using Ink A. However, it is difficult to resolve individual fibres in the print using Ink A and they appear to be more tightly packed than in Fig. 7B using Ink D. Moreover, the fibres appear to be matted together with the binder using Ink A, which could account for the rougher handle of prints using binder-based inks than using inks of the invention.

The arrows in Fig. 7B point to individual cotton fibres using Ink D that appear relatively loosely packed. Such a print would provide improved breathability.

### Example 2

Inkjet inks of the invention are prepared according to the formulations set out in Table 8 and discussed below. The inkjet ink formulations are prepared by mixing the components in the given amounts. Amounts are given as weight percentages based on the total weight of the ink.

Inks 1-10 all contain 5% by weight of magenta pigment, based on the total weight of the ink.

**Table 8. Inks prepared using dispersed encapsulated pigments of EP 3 239 212 (EP'212)**

| **Component** | **Ink 1** | **Ink 2** | **Ink 3** | **Ink 4** | **Ink 5** |
|---|---|---|---|---|---|
| Magenta dispersion of Example 4, Step II of EP'212 | 18.50 | | | | |
| Magenta dispersion of Example 7, Step II of EP'212 | | 18.50 | | | |
| Magenta dispersion of Example 10, Step II of EP'212 | | | 18.50 | | |
| Magenta dispersion of Example 12, Step II of EP'212 | | | | 18.50 | |
| Magenta dispersion of Comparative Example 7, Step II of EP'212 | | | | | 18.50 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.80 | 0.80 | 0.80 | 0.80 | 0.80 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in Step II of Examples 4, 7, 10 and 12 and Comparative Example 7 of EP 3 239 212, which are also dispersed encapsulated pigments according to the invention.

Triethylene glycol and glycerol are organic solvents. Polyglykol^{®} 20000S is a polyethylene glycol (MWt 20kDa) viscosity modifier commercially available from Clariant. Surfynol^{®} 440 is a surfactant. Proxel^{®} GXL is a biocide commercially available from Arxanda. Imprafix^{®} 2794 is a cross-linking agent according to the invention and specifically a water-based aliphatic blocked polyisocyanate commercially available from Covestro.

Inks 6-10 are prepared in the same way as Inks 1-5, respectively, except 0.83% by weight of Trixene^{®} BI 7987 replaces 0.85% by weight of Imprafix^{®} 2794, based on the total weight of the ink. Trixene^{®} BI 7987 is a cross-linking agent according to the invention and specifically is a hexamethylene-1,6-diisocyanate (HDI) trimer with DMP blocking groups. It is commercially available from LANXESS.

Inks 11-15 are prepared in the same way as Inks 1-5, respectively, except 1.13% by weight of Trixene^{®} BI220 replaces 0.85% by weight of Imprafix^{®} 2794, based on the total weight of the ink. Trixene^{®} BI220 is a cross-linking agent according to the invention and specifically is an aliphatic water-dispersed blocked isocyanate based on a hexamethylene-1,6-diisocyanate (HDI) trimer with DMP blocking groups. It is commercially available from LANXESS.

Inks 16-20 are prepared in the same way as Inks 1-5, respectively, except 0.94% by weight of Hydrosin C-28 replaces 0.85% by weight of Imprafix^{®} 2794, based on the total weight of the ink. Hydrosin C-28 is a cross-linking agent according to the invention and specifically is a water-based and solvent-free blocked polyisocyanate. It is commercially available from Maflon S.p.A.

Inks 21-25 are prepared in the same way as Inks 1-5, respectively, except 1.55% by weight of Imprafix AH replaces 0.85% by weight of Imprafix^{®} 2794, based on the total weight of the ink. Imprafix AH is a cross-linking agent according to the invention and specifically is a water-based cosolvent-free blocked aliphatic isocyanate. It is commercially available from Covestro AG.

### Example 3

Inkjet inks of the invention are prepared according to the formulations set out in Table 9 and discussed below. The inkjet ink formulations are prepared by mixing the components in the given amounts. Amounts are given as weight percentages based on the total weight of the ink.

The cyan, yellow and black inks all contain 4% by weight of pigment, and the magenta inks contain 5% by weight of magenta pigment, based on the total weight of the ink.

**Table 9. Inks prepared using dispersed encapsulated pigments of EP 3 395 852 (EP'852)**

| **Component** | **Ink 26** | **Ink 27** | **Ink 28** | **Ink 29** | **Ink 30** |
|---|---|---|---|---|---|
| Yellow dispersion of Example 1-1, (Step (2)) of EP'852 | 22.20 | | | | |
| Magenta dispersion of Example 1-4, (Step (2)) of EP'852 | | 27.80 | | | |
| Cyan dispersion of Example 1-7 (Step (2)) of EP'852 | | | 22.20 | | |
| Black dispersion of Example 1-10 (Step (2)) of EP'852 | | | | 22.20 | |
| Black dispersion of Comparative Example 1-9 (Step (2)) of EP'852 | | | | | 22.20 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.90 | 0.70 | 0.90 | 0.90 | 0.90 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in (Step (2)) of Examples 1-1, 1-4, 1-7 and 1-10 and Comparative Example 1-9 of EP 3 395 852, which are also dispersed encapsulated pigments according to the invention.

Inks 31-35 are prepared in the same way as Inks 26-30, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 4

Inkjet inks of the invention are prepared according to the formulations set out in Table 10 and discussed below. The inkjet ink formulations are prepared by mixing the components in the given amounts. Amounts are given as weight percentages based on the total weight of the ink.

Inks 36-40 all contain 4% by weight of cyan pigment, based on the total weight of the ink.

**Table 10. Inks prepared using dispersed encapsulated pigments of EP 3 397 703 (EP'703)**

| **Component** | **Ink 36** | **Ink 37** | **Ink 38** | **Ink 39** | **Ink 40** |
|---|---|---|---|---|---|
| Cyan dispersion of Example 1 of EP'703 | 20.50 | | | | |
| Cyan dispersion of Example 2 of EP'703 | | 20.50 | | | |
| Cyan dispersion of Example 3 of EP'703 | | | 20.50 | | |
| Cyan dispersion of Example 8 of EP'703 | | | | 20.50 | |
| Cyan dispersion of Comparative Example 2 of EP'703 | | | | | 20.50 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.90 | 0.90 | 0.90 | 0.90 | 0.90 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in Examples 1-3 and 8 and Comparative Example 2 of EP 3 397 703, which are also dispersed encapsulated pigments according to the invention.

Inks 41-45 are prepared in the same way as Inks 36-40, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 5

Inkjet inks of the invention are prepared according to the formulations set out in Table 11 and discussed below. The inkjet ink formulations are prepared by mixing the components in the given amounts. Amounts are given as weight percentages based on the total weight of the ink.

Inks 46-50 all contain 4% by weight of cyan pigment, based on the total weight of the ink.

**Table 11. Inks prepared using dispersed encapsulated pigments of EP 3 527 633 (EP'633)**

| **Component** | **Ink 46** | **Ink 47** | **Ink 48** | **Ink 49** | **Ink 50** |
|---|---|---|---|---|---|
| Cyan dispersion B2 of Example 1 of EP'633 | 20.50 | | | | |
| Cyan dispersion B8 of Example 5 of EP'633 | | 20.50 | | | |
| Cyan dispersion B13 of Example 9 of EP'633 | | | 20.50 | | |
| Cyan dispersion B23 of Example 13 of EP'633 | | | | 20.50 | |
| Cyan dispersion B21 of Comparative Example 10 of EP'633 | | | | | 20.50 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.90 | 0.90 | 0.90 | 0.90 | 0.90 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in Examples 1, 5, 9 and 13 and Comparative Example 10 of EP 3 527 633, which are also dispersed encapsulated pigments according to the invention.

Inks 51-55 are prepared in the same way as Inks 46-50, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 6

Inkjet inks of the invention are prepared according to the formulations set out in Table 12 and discussed below. The inkjet ink formulations are prepared by mixing the components in the given amounts. Amounts are given as weight percentages based on the total weight of the ink.

The cyan and black inks all contain 4% by weight of pigment, and the magenta inks contain 5% by weight of magenta pigment, based on the total weight of the ink.

**Table 12. Inks prepared using dispersed encapsulated pigments of EP 3 498 792 (EP'792)**

| **Component** | **Ink 56** | **Ink 57** | **Ink 58** | **Ink 59** | **Ink 60** |
|---|---|---|---|---|---|
| Cyan dispersion 1 of Example 1-1 of EP'792 | 21.40 | | | | |
| Magenta dispersion 5 of Example 1-5 of EP'792 | | 25.65 | | | |
| Black dispersion 8 of Example 1-8 of EP'792 | | | 21.40 | | |
| Cyan dispersion 10 of Example 1-10 of EP'792 | | | | 21.40 | |
| Cyan dispersion 13 of Comparative Example 1-2 of EP'792 | | | | | 21.40 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.90 | 0.70 | 0.90 | 0.90 | 0.90 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in Examples 1-1, 1-5, 1-8 and 1-10 and Comparative Example 1-2 of EP 3 498 792, which are also dispersed encapsulated pigments according to the invention.

Inks 61-65 are prepared in the same way as Inks 56-60, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 7

Inkjet inks of the invention are prepared according to the formulations set out in Table 13 and discussed below. The inkjet ink formulations are prepared by mixing the components in the given amounts. Amounts are given as weight percentages based on the total weight of the ink.

Inks 66-70 all contain 4% by weight of cyan pigment, based on the total weight of the ink.

**Table 13. Inks prepared using dispersed encapsulated pigments of EP 3 650 509 (EP'509)**

| **Component** | **Ink 66** | **Ink 67** | **Ink 68** | **Ink 69** | **Ink 70** |
|---|---|---|---|---|---|
| Cyan dispersion A2 of Production Example 2 of EP'509 | 20.50 | | | | |
| Cyan dispersion A3 of Production Example 3 of EP'509 | | 20.50 | | | |
| Cyan dispersion A4 of Production Example 4 of EP'509 | | | 20.50 | | |
| Cyan dispersion A5 of Production Example 14 of EP'509 | | | | 20.50 | |
| Cyan dispersion A7 of Production Example 16 of EP'509 | | | | | 20.50 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.90 | 0.90 | 0.90 | 0.90 | 0.90 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in Production Examples 2-4, 14 and 16 of EP 3 650 509, which are also dispersed encapsulated pigments according to the invention.

Inks 71-75 are prepared in the same way as Inks 66-70, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 8

Inkjet inks of the invention are prepared according to the formulations set out in Table 14 and discussed below. The inkjet ink formulations are prepared by mixing the components in the given amounts. Amounts are given as weight percentages based on the total weight of the ink.

Inks 76-80 all contain 5% by weight of magenta pigment, based on the total weight of the ink.

**Table 14. Inks prepared using dispersed encapsulated pigments of EP 3 650 510 (EP'510)**

| **Component** | **Ink 76** | **Ink 77** | **Ink 78** | **Ink 79** | **Ink 80** |
|---|---|---|---|---|---|
| Magenta dispersion of Production Example 1 of EP'510 | 23.00 | | | | |
| Magenta dispersion of Production Example 2 of EP'510 | | 23.00 | | | |
| Magenta dispersion of Production Example 4 of EP'510 | | | 23.00 | | |
| Magenta dispersion of Production Example 5 of EP'510 | | | | 23.00 | |
| Magenta dispersion of Production Example 7 of EP'510 | | | | | 23.00 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.70 | 0.70 | 0.70 | 0.70 | 0.70 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments prepared in Production Examples 1, 2, 4, 5 and 7 of EP 3 650 510, which are also dispersed encapsulated pigments according to the invention.

Inks 81-85 are prepared in the same way as Inks 76-80, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 9

Inkjet inks of the invention are prepared according to the formulations set out in Table 15 and discussed below. The inkjet ink formulations are prepared by mixing the components in the given amounts. Amounts are given as weight percentages based on the total weight of the ink.

The cyan, yellow and black inks all contain 4% by weight of pigment, and the magenta inks contain 5% by weight of magenta pigment, based on the total weight of the ink.

**Table 15. Inks prepared using dispersed encapsulated pigments of GB 2 592 298 (GB'298)**

| **Component** | **Ink 86** | **Ink 87** | **Ink 88** | **Ink 89** | **Ink 90** |
|---|---|---|---|---|---|
| Yellow PigDisp-4 of GB'298 | 19.90 | | | | |
| Cyan PigDisp-7 of GB'298 | | 19.60 | | | |
| Magenta PigDisp-15 of GB'298 | | | 30.30 | | |
| Black PigDisp-22 of GB'298 | | | | 19.40 | |
| Black PigDisp-23 of GB'298 | | | | | 23.40 |
| Triethylene glycol | 12.00 | 12.00 | 12.00 | 12.00 | 12.00 |
| Glycerol | 28.00 | 28.00 | 28.00 | 28.00 | 28.00 |
| Polyglykol^{®} 20000S | 0.90 | 0.90 | 0.80 | 0.90 | 0.90 |
| Surfynol^{®} 440 | 0.23 | 0.23 | 0.23 | 0.23 | 0.23 |
| Proxel^{®} GXL | 0.075 | 0.075 | 0.075 | 0.075 | 0.075 |
| Imprafix^{®} 2794 | 0.85 | 0.85 | 0.85 | 0.85 | 0.85 |
| Water | to 100 | to 100 | to 100 | to 100 | to 100 |

The dispersions are dispersed encapsulated pigments Yellow PigDisp-4, Cyan PigDisp-7, Magenta PigDisp-15, Black PigDisp-22 and Black PigDisp-23 prepared in the Pigment Dispersion Examples of GB 2 592 298, which are also dispersed encapsulated pigments according to the invention.

Inks 91-95 are prepared in the same way as Inks 86-90, respectively, except 0.83% by weight of Trixene^{®} BI 7987 replaces 0.85% by weight of Imprafix^{®} 2794, based on the total weight of the ink.

As for Example 2, 1.13% by weight of Trixene^{®} BI220, 0.94% by weight of Hydrosin C-28 or 1.55% by weight of Imprafix AH also replaces 0.85% by weight of Imprafix^{®} 2794, where the amounts are based on the total weight of the ink, to prepare additional inkjet inks of the invention.

### Example 10

Inkjet inks were prepared according to the formulations set out in Table 16. The inkjet ink formulations were prepared by mixing the components in the given amounts and filtering them through two 1 µm glass fibre filters from Whatman^{®}. The cross-linking agent was added as the final component of the ink prior to filtration. Amounts are given as weight percentages based on the total weight of the inks.

**Table 16**

| **Component** | **Ink F** | **Ink G** | **Ink H** | **Ink I** |
|---|---|---|---|---|
| Deionised Water | 19.65 | 19.51 | 24.42 | 24.00 |
| Pro-Jet^{®} APD 1000 black dispersion | 28.17 | - | 28.17 | 28.17 |
| Encapsulated black pigment dispersion F | - | 28.31 | - | - |
| Glycerol | 27.49 | 27.49 | 27.21 | 27.21 |
| Triethylene Glycol | 10.00 | 10.000 | 10.00 | 10.00 |
| Surfynol^{®} 440 | 0.32 | 0.32 | 0.13 | 0.150 |
| Proxel^{®} GXL | 0.075 | 0.075 | 0.075 | 0.075 |
| Imprafix^{®} 2794 | 10.00 | 10.00 | 10.00 | - |
| Trixene^{®} BI220G | - | - | - | 10.40 |
| Hytec Wax E-6314 | 4.30 | 4.30 | - | - |

Pro-Jet^{®} APD 1000 black dispersion is an encapsulated pigment according to the invention, which is commercially available from FUJIFILM Imaging Colorants Limited.

Encapsulated black pigment dispersion F is an encapsulated pigment dispersion of the invention and was prepared using cross-linkable polymer 2 in Example 1 and trimethylolpropane polyglycidyl ether (Denacol EX-321) as a cross-linking agent, as described in Example 1 with the exception that Imprafix^{®} 2794 was not added. The cross-linked polymer coating having pendant hydrophilic groups including hydroxyl groups was prepared using three monomers. The third monomer is 2-hydroxypropyl (meth)acrylate (HPMA) and introduces additional hydroxyl groups into the encapsulated pigment dispersion.

Triethylene glycol and glycerol are organic solvents. Surfynol^{®} 440 is a surfactant commercially available from Evonik. Proxel^{®} GXL is a biocide commercially available from Arxanda. Imprafix^{®} 2794 is a cross-linking agent according to the invention and specifically a water-based aliphatic blocked polyisocyanate commercially available from Covestro. Trixene^{®} BI220G is a cross-linking agent according to the invention and specifically an aliphatic water-dispersed blocked isocyanate based on hexamethylene diisocyanate with 3,5-dimethyl pyrazole as a blocking agent commercially available from LANXESS. Hytec Wax E-6314 is a wax and specifically an oxidised polyethylene wax emulsion commercially available from Toho Chemical Industry Co., Ltd.

Inks F-I are inks of the invention.

Comparative Ink A of Example 1 and Inks F-I of the invention were printed single pass on an Integrity printer with a KJ4B Kyocera head at large drop size and 600 X 600 DPI onto the following textile substrates: 6978 (Fine Warp Satin) T cotton (100% cotton), 6978 (Fine Warp Satin) UT cotton (100% cotton), and 7026 (Jersey) T 95% Cotton/5% Lycra^{®} blend, which were obtained from Premier Textiles. T denotes that the textile has a layer of pre-treat (as sold) designed to enhance pigment ink properties. If the textile has no pre-treat applied to it, it is labelled as UT. Ink I was also additionally printed onto 407 Bleached mercerized cotton poplin (100% cotton) obtained from Test Fabrics.

The prints were placed in an oven at 70°C for 15 minutes, immediately after printing. They were then transferred to the hot press for one minute at 180°C. The prints were cooled under ambient conditions to room temperature before application testing.

The printed inks were tested for wash-fastness, wet and dry crock, and handle.

### Test 1

Wash-fastness was assessed using the colour-fastness to commercial and domestic laundering test by washing the prints in a rotor wash (SDL Atlas/M228C) and applying the ISO 105-C06:2010 B1M colour change and multi-staining fibre methodologies. The print is washed in the machine canister with 0.225 g of AATCC 1993 Standard Reference Powder Detergent without Optical Brighteners, and a multi-staining fibre test cloth consisting of six materials.

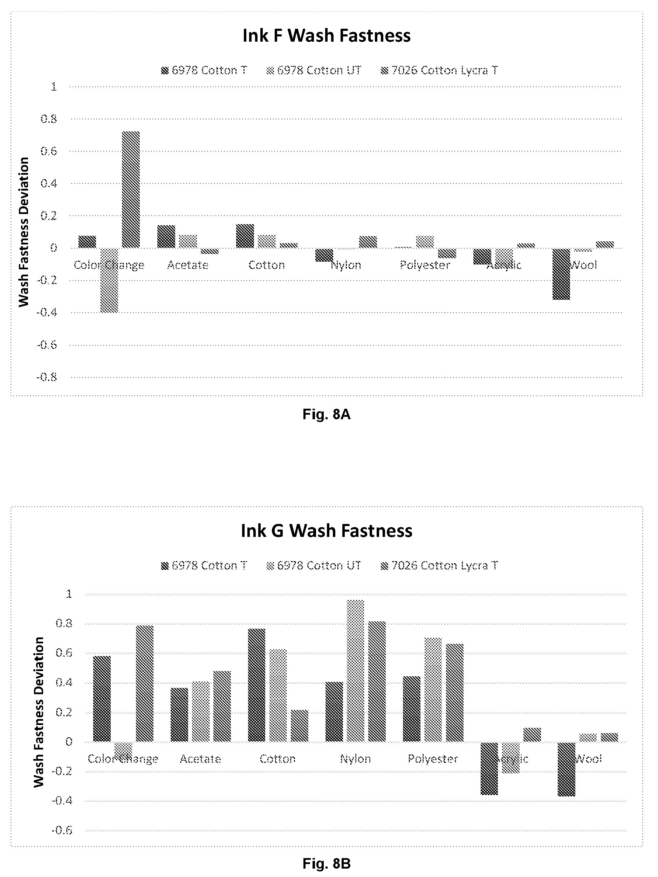

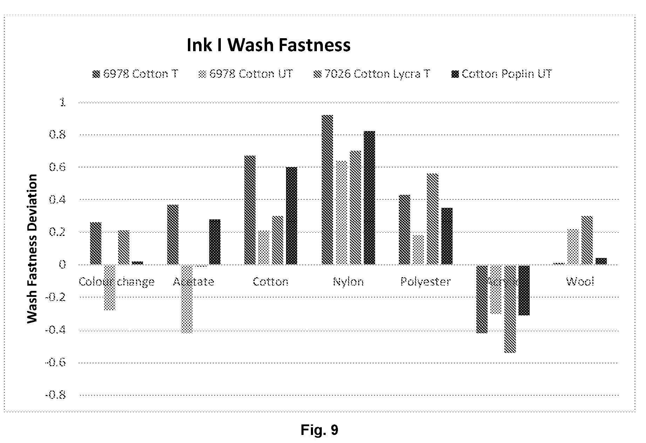

The colour change between the pre- and post-washed print was measured with the Spectro-CG method and labelled as colour change on the x-axis of Figs. 8A, 8B and 9.

The Spectro-CG method involved measuring colour with a spectrophotometer (Exact X-Rite Pantone), specifically measuring ΔE (CIE 76), and using the following equation to convert to greyscale (CG): $CG = A {e}^{BΔE} ,$ where if
ΔE < 12: A = 5.063244 and B = -0.059532
ΔE ≥ 12: A = 4.0561216 and B = -0.041218.

The colour transfer from the print to the multi-staining fibre cloth was also measured with the Spectro-CG method. These data are included on Figs. 8A, 8B and 9, where each of the muti-staining cloth materials (cotton, acetate, nylon, acrylic, polyester and wool) are listed on the x-axis.

The colour change and colour transfer were also assessed visually with a greyscale reference (multi-fibre staining: greyscale for colour transfer ISO 105-A03; and colour change: greyscale for colour change ISO 105-A02).

The results for Inks F and G of the invention are shown in Figs. 8A and 8B. Figs. 8A and 8B show the wash-fastness deviation for Inks F and G of the invention, respectively, from the standard binder reference Ink A, as measured with the Spectro-CG method. The range of -0.3 to +0.3 on the y axis is the experimental error range. Within this error range, Inks F and G of the invention are regarded to have identical wash-fastness to that of comparative Ink A.

As can be seen from Figs. 8A and 8B, Ink F of the invention has identical wash-fastness to that of comparative Ink A. Ink G of the invention shows significant improvement in wash-fastness as compared to that of comparative Ink A. Whilst both Inks F and G of the invention both contain a dispersed encapsulated pigment consisting of pigment particles encapsulated by a cross-linked polymer coating having pendant hydrophilic groups including hydroxyl groups, encapsulated black pigment dispersion F present in Ink G of the invention has additional hydroxyl groups. It should be noted that these wash-fastness trends are observed on both treated and untreated cotton surfaces and on the cotton/Lycra^{®} mix (jersey material).

These results support the theory that the nature of the encapsulated pigment influences the pigment adhesion to the substrate as discussed above. These data point to superior adhesion (from a wash-fastness perspective) using an encapsulated pigment having additional hydroxyl groups (Ink G) compared to one without additional hydroxyl groups (Ink F). However, both Inks F and G of the invention have superior dry crock on untreated cotton compared to comparative Ink A (see Test 2 below). Ink F of the invention also has superior handle compared to comparative Ink A (see Test 3 below).

Note the significant improvement in the colour change test for Ink F and in both the colour change and multi-staining aspects of the wash-fastness test for Ink G, as compared to Ink A when printed on jersey material.

The actual wash-fastness ratings (measured visually with the greyscale chart) on the standard 0-5 scale were extremely strong for both inks. Inks F and G scored 4-5/5 for all tests apart from the wool strip of the multi-staining fibre which was 3-4 (treated and untreated cotton prints).

Wash-fastness for Ink I of the invention is illustrated in the same format as for inks F and G but in Fig. 9. Overall, the wash-fastness was improved for Ink I of the invention as compared to comparative Ink A. The actual wash-fastness ratings (measured visually with the greyscale chart) on the standard 0-5 scale were good, with all wash-fastness data measured at 4-5, apart from the acrylic staining, which measured at 3-4. It is interesting to note the wash-fastness difference between the two different untreated cottons.

### Test 2

Wet and dry crock were assessed with the ISO 105 X12 (horizontal crock) and ISO 105 X16 (vertical crock) standards. Wet crock ≥ 3 and dry crock ≥4 is commercially desirable for apparel applications on cotton. The vertical (rotary) crock method was only used to assess crock on the cotton/Lycra^{®} mix (jersey) material. The horizontal crock method was used for all of the other textiles.

The dry crock-fastness was also assessed visually with a greyscale reference (vertical (rotary) crock: greyscale for colour transfer (wet and dry crock) ISO 105-A03; and horizontal crock: greyscale for colour transfer (wet and dry crock) ISO 105-A03).

The wet and dry crock results for Inks F and G are illustrated in Figs. 9A and 9B. These results show crock deviation from the standard binder reference Ink A, as measured with the Spectro-CG method described in Test 1. Within the error range (-0.3 to +0.3), Inks F and G are regarded to have identical crock-fastness to that of Ink A. The wet and dry crock for prints from both Inks F and G is either as good or better than that of Ink A on the three stated textiles.

Note the significant dry crock improvement for both Inks F and G on the untreated cotton substrate, as compared with that of Ink A.

The dry crock fastness ratings, as measured visually with the greyscale chart on the standard 0-5 scale were good (4-5) for both Inks F and G. Both Inks F and G exhibited significant wet crock results on the jersey material (3) when measured visually with the greyscale chart. This wet crock result on jersey is an unusually good result in the digital pigment textile ink field.

### Test 3

Handle was assessed by performing a survey on a group of people with basic textile handle training, referred to as the handle panel.

For the inks printed onto 6978 cotton UT, 24 out of 30 people said that Ink F prints were softer than Ink A prints. It should be noted that 21 out of 30 people said that Ink F prints felt softer than Ink H prints, which is indicative that wax adds a conditioning element to the ink handle. 17 out of 25 people claimed that Ink I prints felt softer than Ink A prints.

### Example 11

Inkjet inks were prepared according to the formulations set out in Tables 17 and 18. The inkjet ink formulations were prepared by mixing the components in the given amounts and filtering them through two 1 µm glass fibre filters from Whatman^{®}. The cross-linking agent was added as the final component of the ink prior to filtration. Amounts are given as weight percentages based on the total weight of the inks.

**Table 17**

| **Component** | **Ink J** | **Ink K** | **Ink L** | **Ink M** |
|---|---|---|---|---|
| Deionised Water | 40.30 | 25.09 | 35.60 | 35.20 |
| Pro-Jet^{®} APD 4000 cyan dispersion | 20.00 | - | - | - |
| Pro-Jet^{®} APD 1000 magenta dispersion | - | 35.70 | - | - |
| Pro-Jet^{®} APD 1000 LF yellow dispersion | - | - | 27.20 | - |
| Pro-Jet^{®} APD 1000 black dispersion | - | - | - | 28.60 |
| Glycerol | 27.50 | 26.50 | 25.00 | 24.0 |
| Triethylene Glycol | 10.00 | 10.00 | 10.00 | 10.00 |
| Surfynol^{®} 440 | 0.13 | 0.14 | 0.13 | 0.130 |
| Proxel^{®} GXL | 0.075 | 0.075 | 0.075 | 0.075 |
| Imprafix^{®} 2794 | 2.00 | 2.50 | 2.00 | 2.00 |

**Table 18**

| **Component** | **Ink N** | **Ink O** | **Ink P** | **Ink Q** |
|---|---|---|---|---|
| Deionised Water | 26.83 | 12.18 | 22.13 | 21.73 |
| Pro-Jet^{®} APD 4000 cyan dispersion | 20.00 | - | - | - |
| Pro-Jet^{®} APD 1000 magenta dispersion | - | 35.70 | - | - |
| Pro-Jet^{®} APD 1000 LF yellow dispersion | - | - | 27.20 | - |
| Pro-Jet^{®} APD 1000 black dispersion | - | - | - | 28.60 |
| Glycerol | 27.50 | 26.50 | 25.00 | 24.00 |
| Triethylene Glycol | 10.00 | 10.00 | 10.00 | 10.00 |
| Surfynol^{®} 440 | 0.35 | 0.30 | 0.35 | 0.35 |
| Proxel^{®} GXL | 0.075 | 0.075 | 0.075 | 0.075 |
| Rovene^{®} 4170 | 15.00 | 15.00 | 15.00 | 15.00 |
| Snowtex XS | 0.245 | 0.245 | 0.245 | 0.245 |

Pro-Jet^{®} APD 4000 cyan dispersion, Pro-Jet^{®} APD 1000 magenta dispersion, Pro-Jet^{®} APD 1000 LF yellow dispersion and Pro-Jet^{®} APD 1000 black dispersion are encapsulated pigments according to the invention, which are commercially available from FUJIFILM Imaging Colorants Limited.

Triethylene glycol and glycerol are organic solvents. Surfynol^{®} 440 is a surfactant commercially available from Evonik. Proxel^{®} GXL is a biocide commercially available from Arxanda. Rovene^{®} 4170 is a carboxylated self-cross-linking styrene butadiene copolymer binder resin commercially available from Mallard Creek. Snowtex XS is a colloidal silica commercially available from Nissan Chemical.

Inks J-M are inks of the invention. Inks N-Q contain a binder resin instead of a cross-linking agent of the invention and so are comparative inks.

Inks J-Q were printed on a Laforte 100 printer using a Kyocera KJ4B head, at 8 passes, 900 x 600 DPI at (High Laydown) large drop size and (Medium Laydown) medium drop size onto 6978 treated cotton. A double hit was used for the black inks (Inks M and Q), following standard protocol. Black Inks M and Q were additionally printed onto 6978 cotton UT, 1513 Silk T and 7026 cotton/Lycra^{®} (jersey) T substrates. Magenta Inks K and O were additionally printed onto 6978 cotton UT, 1513 Silk T substrates.

Immediately after printing, the standard binder-based textile ink prints (Inks N-Q) were passed though the Lv3 fixing unit at 125°C and the experimental textile ink prints (Inks J-M) were passed though the Lv3 fixing unit at 70°C. Ink N-Q prints were then transferred to the oven at 170°C and Inks J-M prints were transferred to the oven at 150°C, for a 2-7 minute period. The prints were cooled under ambient conditions to room temperature before application testing.

The printed inks were tested for optical density, wash-fastness and handle.

### Test 1

Optical density (OD) of the inks printed onto 6978 treated cotton was measured using a spectrophotometer (X-rite Exact). The results are shown in Table 19.

**Table 19**

| **Ink** | **Colour** | **OD** |
|---|---|---|
| J | Cyan | 1.24 |
| N | Cyan | 1.19 |
| K | Magenta | 1.1 |
| O | Magenta | 1.0 |
| L | Yellow | 0.85 |
| P | Yellow | 0.80 |
| M | Black | 1.48 |
| Q | Black | 1.39 |

As can be seen from the results, all of the inventive inks of the ink set (Inks J-M) had superior ODs compared to the corresponding comparative ink of the ink set (Inks N-Q). The OD for black Ink M is a significant result, as it is extremely close to the black reactive dye print OD range of 1.53-1.55 on cotton. The black reactive dye OD range is a commercial digital pigment textile market target and is extremely difficult to achieve.

### Test 2

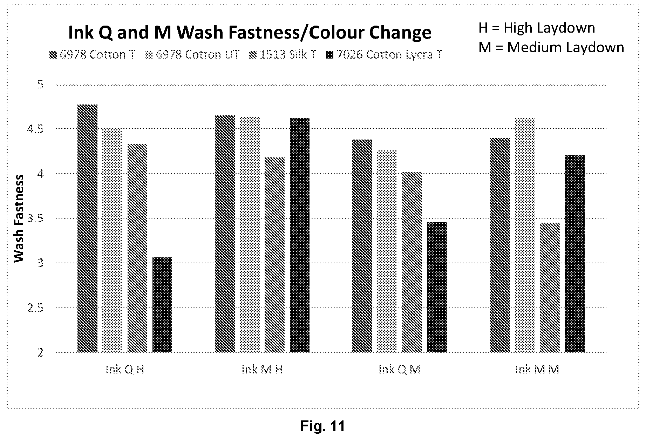

The wash-fastness of black Inks M and Q printed onto 6978 Cotton T, 6978 Cotton UT, 1513 Silk T and 7026 Cotton/Lycra (jersey) T was measured as described in Example 10. The results are shown in Fig. 11.

As can be seen from Fig. 11, the wash-fastness of Inks M and Q on the treated cotton are identical (within error). Inks M and Q have similar wash-fastness on the untreated cotton and treated silk substrates. However, the wash-fastness of Ink M of the invention on treated jersey is notably superior to comparative Ink Q.

### Test 3

The handle of magenta Inks K and O printed on 6978 Cotton UT and 1513 Silk T substrates was assessed as described in Example 10.

25 out of 30 people reported that Ink K had softer handle than Ink O when printed on 6978 Cotton UT. 28 out of 30 people reported that Ink K had softer handle than Ink O when printed on 1513 Silk T.

Based on the results of Examples 10 and 11, all tested inks of the invention had significantly softer handle than that of the standard binder reference inks. The wax component added a conditioning element to the handle.

Very competitive wash-fastness results, as judged on the appropriate greyscale were exhibited by inventive inks using two different cross-linking agents (Figs. 8A and 8B showed the results using an anionic polyisocyanate and Fig. 9 showed the results using a non-ionic polyisocyanate, even at very low concentrations, namely 2% Imprafix^{®} 2794).

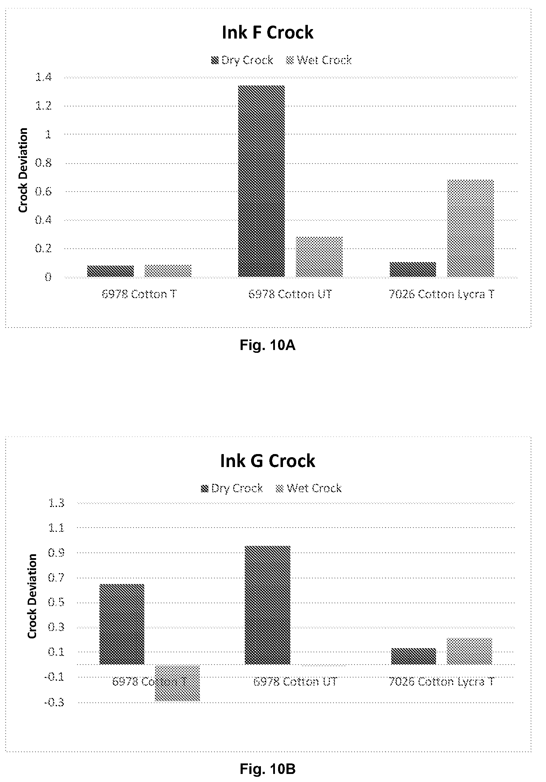

The inks of the invention had equal or superior crock to that of the standard binder inks (Figs. 10A and 10B).

The inventive inks of the ink set had superior OD to the corresponding colour print of the standard binder reference ink set (Table 19).

Note the strong performance of the inks of the invention on jersey material from a wash-fastness and crock perspective.

## Claims

1. An inkjet ink comprising:
a continuous aqueous phase;
a dispersed encapsulated pigment comprising pigment particles encapsulated by a cross-linked polymer coating having pendant hydrophilic groups including hydroxyl groups;
a cross-linking agent having two or more protected reactive groups, wherein the two or more protected reactive groups, when deprotected, are reactive to hydroxyl groups;
wherein the ink contains less than 5% by weight of a binder resin, based on the total weight of the ink; and
wherein the dispersed encapsulated pigment is present in an amount of 3 to 20% by weight, based on the total weight of the ink.

2. An inkjet ink as claimed in claim 1, wherein the dispersed encapsulated pigment consists of pigment particles encapsulated by a cross-linked polymer coating having pendant hydrophilic groups including hydroxyl groups.

3. An inkjet ink as claimed in claim 1 or 2, wherein the pendant hydrophilic groups further include carboxyl groups.

4. An inkjet ink as claimed in any one of claims 1 to 3, wherein the cross-linking agent having two or more protected reactive groups is a blocked di- and/or poly-isocyanate where the two or more isocyanate groups are protected.

5. An inkjet ink as claimed in any preceding claim, wherein the two or more protected reactive groups, when deprotected, are present in the ink in an amount of 0.01 to 1.00%, preferably 0.02 to 0.80%, more preferably 0.03 to 0.60% by weight, based on the total weight of the ink.

6. A method of inkjet printing comprising the following steps in order:
(i) providing an inkjet ink as claimed in any preceding claim;
(ii) inkjet printing the inkjet ink onto a substrate to provide a printed substrate;
(iii) drying the printed substrate to remove water; and
(iv) deprotecting the two or more protected reactive groups.

7. A method of inkjet printing as claimed in claim 6, wherein the two or more protected reactive groups are reactive to hydroxyl groups when thermally deprotected, and wherein deprotecting the two or more protected reactive groups is by heating the printed substrate to a temperature sufficient to deprotect the two or more protected reactive groups.

8. A method of inkjet printing as claimed in claim 6 or 7, wherein the substrate is a textile substrate, and wherein the textile substrate is composed of a polymeric material having reactive groups which are available to react with the two or more protected reactive groups of the cross-linking agent, when deprotected, preferably wherein the textile substrate comprises a cellulosic material.

9. A method of inkjet printing as claimed in any one of claims 6 to 8, wherein drying the printed substrate to remove water comprises heating the printed substrate to a temperature of less than 100°C.

10. A method of inkjet printing as claimed in any one of claims 7 to 9, wherein the temperature sufficient to deprotect the two or more protected reactive groups is 100°C or higher, preferably 120°C or higher, more preferably 135°C or higher.

11. A dispersion comprising:
a continuous aqueous phase;
a dispersed encapsulated pigment comprising pigment particles encapsulated by a cross-linked polymer coating having pendant hydrophilic groups including hydroxyl groups;
a cross-linking agent having two or more protected reactive groups, wherein the two or more protected reactive groups, when deprotected, are reactive to hydroxyl groups;
wherein the dispersion contains less than 5% by weight of a binder resin, based on the total weight of the dispersion; and
wherein the dispersed encapsulated pigment is present in an amount of 8 to 20% by weight, based on the total weight of the dispersion.

12. A printed substrate having the inkjet ink as claimed in any one of claims 1 to 5 printed thereon.

13. A printed substrate obtainable by the method of any one of claims 6 to 10.

## Patentansprüche

1. Tintenstrahlfarbe, umfassend:
eine kontinuierliche wässrige Phase;
ein dispergiertes eingekapseltes Pigment, das Pigmentpartikel umfasst, die durch eine vernetzte Polymerbeschichtung mit anhängenden hydrophilen Gruppen, beinhaltend Hydroxylgruppen, eingekapselt sind;
ein Vernetzungsmittel mit zwei oder mehr geschützten reaktiven Gruppen, wobei die zwei oder mehr geschützten reaktiven Gruppen, wenn sie entschützt sind, reaktiv gegenüber Hydroxylgruppen sind;
wobei die Farbe weniger als 5 Gewichts-% eines Bindemittelharzes basierend auf dem Gesamtgewicht der Farbe enthält; und
wobei das dispergierte eingekapselte Pigment in einer Menge von 3 bis 20 Gewichts-% basierend auf dem Gesamtgewicht der Farbe vorhanden ist.

2. Tintenstrahlfarbe nach Anspruch 1, wobei das dispergierte eingekapselte Pigment aus Pigmentpartikeln besteht, die durch eine vernetzte Polymerbeschichtung mit anhängenden hydrophilen Gruppen, beinhaltend Hydroxylgruppen, eingekapselt sind.

3. Tintenstrahlfarbe nach Anspruch 1 oder 2, wobei die anhängenden hydrophilen Gruppen ferner Carboxylgruppen beinhalten.

4. Tintenstrahlfarbe nach einem der Ansprüche 1 bis 3, wobei das Vernetzungsmittel mit zwei oder mehr geschützten reaktiven Gruppen ein blockiertes Di- und/oder Polyisocyanat ist, bei dem die zwei oder mehr Isocyanatgruppen geschützt sind.

5. Tintenstrahlfarbe nach einem vorhergehenden Anspruch, wobei die zwei oder mehr geschützten reaktiven Gruppen, wenn sie entschützt sind, in der Tinte in einer Menge von 0,01 bis 1,00 %, bevorzugt 0,02 bis 0,80 %, bevorzugter 0,03 bis 0,60 Gewichts-% basierend auf dem Gesamtgewicht der Farbe vorhanden sind.

6. Verfahren zum Tintenstrahldrucken, umfassend die folgenden Schritte in Reihenfolge:
(i) Bereitstellen einer Tintenstrahlfarbe nach einem vorhergehenden Anspruch;
(ii) Tintenstrahldrucken der Tintenstrahlfarbe auf ein Substrat, um ein bedrucktes Substrat bereitzustellen;
(iii) Trocknen des bedruckten Substrats, um Wasser zu entfernen; und
(iv) Entschützen der zwei oder mehr geschützten reaktiven Gruppen.

7. Verfahren zum Tintenstrahldrucken nach Anspruch 6, wobei die zwei oder mehr geschützten reaktiven Gruppen reaktiv gegenüber Hydroxylgruppen sind, wenn sie thermisch entschützt sind, und wobei das Entschützen der zwei oder mehr geschützten reaktiven Gruppen durch Erhitzen des bedruckten Substrats auf eine Temperatur ist, die ausreicht, um die zwei oder mehr geschützten reaktiven Gruppen zu entschützen.

8. Verfahren zum Tintenstrahldrucken nach Anspruch 6 oder 7, wobei das Substrat ein Textilsubstrat ist und wobei das Textilsubstrat aus einem polymeren Material mit reaktiven Gruppen besteht, die verfügbar sind, um mit den zwei oder mehr geschützten reaktiven Gruppen des Vernetzungsmittels zu reagieren, wenn sie entschützt sind, wobei bevorzugt das Textilsubstrat ein Cellulosematerial umfasst.

9. Verfahren zum Tintenstrahldrucken nach einem der Ansprüche 6 bis 8, wobei das Trocknen des bedruckten Substrats, um Wasser zu entfernen, Erhitzen des bedruckten Substrats auf eine Temperatur von weniger als 100 °C umfasst.

10. Verfahren zum Tintenstrahldrucken nach einem der Ansprüche 7 bis 9, wobei die Temperatur, die ausreicht, um die zwei oder mehr geschützten reaktiven Gruppen zu entschützen, 100 °C oder höher, bevorzugt 120 °C oder höher, bevorzugter 135 °C oder höher ist.

11. Dispersion, umfassend:
eine kontinuierliche wässrige Phase;
ein dispergiertes eingekapseltes Pigment, das Pigmentpartikel umfasst, die durch eine vernetzte Polymerbeschichtung mit anhängenden hydrophilen Gruppen, beinhaltend Hydroxylgruppen, eingekapselt sind;
ein Vernetzungsmittel mit zwei oder mehr geschützten reaktiven Gruppen, wobei die zwei oder mehr geschützten reaktiven Gruppen, wenn sie entschützt sind, reaktiv gegenüber Hydroxylgruppen sind;
wobei die Dispersion weniger als 5 Gewichts-% eines Bindemittelharzes basierend auf dem Gesamtgewicht der Dispersion enthält; und
wobei das dispergierte eingekapselte Pigment in einer Menge von 8 bis 20 Gewichts-% basierend auf dem Gesamtgewicht der Dispersion vorhanden ist.

12. Bedrucktes Substrat, auf das die Tintenstrahlfarbe nach einem der Ansprüche 1 bis 5 aufgedruckt ist.

13. Bedrucktes Substrat, das durch das Verfahren nach einem der Ansprüche 6 bis 10 erhaltbar ist.

## Revendications

1. Encre pour jet d'encre comprenant :
une phase aqueuse continue ;
un pigment encapsulé dispersé comprenant des particules de pigment encapsulées par un revêtement polymère réticulé présentant des groupes hydrophiles pendants comprenant des groupes hydroxyle ;
un agent de réticulation présentant deux groupes réactifs protégés ou plus, dans laquelle les deux groupes réactifs protégés ou plus, lorsqu'ils sont déprotégés, sont réactifs aux groupes hydroxyle ;
dans laquelle l'encre contient moins de 5 % en poids d'une résine liante, sur la base du poids total de l'encre ; et
dans laquelle le pigment encapsulé dispersé est présent en une quantité de 3 à 20 % en poids, sur la base du poids total de l'encre.

2. Encre pour jet d'encre selon la revendication 1, dans laquelle le pigment encapsulé dispersé est constitué de particules de pigment encapsulées par un revêtement polymère réticulé présentant des groupes hydrophiles pendants comprenant des groupes hydroxyle.

3. Encre pour jet d'encre selon la revendication 1 ou 2, dans laquelle les groupes hydrophiles pendants comprennent en outre des groupes carboxyle.

4. Encre pour jet d'encre selon l'une quelconque des revendications 1 à 3, dans laquelle l'agent de réticulation présentant deux groupes réactifs protégés ou plus est un di- et/ou poly-isocyanate bloqué où les deux groupes isocyanate ou plus sont protégés.

5. Encre pour jet d'encre selon une quelconque revendication précédente, dans laquelle les deux groupes réactifs protégés ou plus, lorsqu'ils sont déprotégés, sont présents dans l'encre en une quantité de 0,01 à 1,00 %, de préférence de 0,02 à 0,80 %, idéalement de 0,03 à 0,60 % en poids, sur la base du poids total de l'encre.

6. Procédé d'impression à jet d'encre comprenant les étapes suivantes dans l'ordre :
(i) fourniture d'une encre pour jet d'encre selon une quelconque revendication précédente ;
(ii) impression à jet d'encre de l'encre pour jet d'encre sur un substrat pour fournir un substrat imprimé ;
(iii) séchage du substrat imprimé pour éliminer l'eau ; et
(iv) déprotection des deux groupes réactifs protégés ou plus.

7. Procédé d'impression à jet d'encre selon la revendication 6, dans lequel les deux groupes réactifs protégés ou plus sont réactifs aux groupes hydroxyle lorsqu'ils sont déprotégés thermiquement, et dans lequel la déprotection des deux groupes réactifs protégés ou plus se fait en chauffant le substrat imprimé à une température suffisante pour déprotéger les deux groupes réactifs protégés ou plus.

8. Procédé d'impression à jet d'encre selon la revendication 6 ou 7, dans lequel le substrat est un substrat textile, et dans lequel le substrat textile est composé d'un matériau polymère présentant des groupes réactifs qui sont disponibles pour réagir avec les deux groupes réactifs protégés ou plus de l'agent de réticulation, lorsqu'ils sont déprotégés, de préférence dans lequel le substrat textile comprend un matériau cellulosique.

9. Procédé d'impression à jet d'encre selon l'une quelconque des revendications 6 à 8, dans lequel le séchage du substrat imprimé pour éliminer l'eau comprend la chauffe du substrat imprimé à une température inférieure à 100 °C.

10. Procédé d'impression à jet d'encre selon l'une quelconque des revendications 7 à 9, dans lequel la température suffisante pour déprotéger les deux groupes réactifs protégés ou plus est de 100 °C ou plus, de préférence de 120 °C ou plus, idéalement de 135 °C ou plus.

11. Dispersion comprenant :
une phase aqueuse continue ;
un pigment encapsulé dispersé comprenant des particules de pigment encapsulées par un revêtement polymère réticulé présentant des groupes hydrophiles pendants comprenant des groupes hydroxyle ;
un agent de réticulation présentant deux groupes réactifs protégés ou plus, dans laquelle les deux groupes réactifs protégés ou plus, lorsqu'ils sont déprotégés, sont réactifs aux groupes hydroxyle ;
dans laquelle la dispersion contient moins de 5 % en poids d'une résine liante, sur la base du poids total de la dispersion ; et
dans laquelle le pigment encapsulé dispersé est présent en une quantité de 8 à 20 % en poids, sur la base du poids total de la dispersion.

12. Substrat imprimé sur lequel est imprimée l'encre pour jet d'encre selon l'une quelconque des revendications 1 à 5.

13. Substrat imprimé pouvant être obtenu par le procédé de l'une quelconque des revendications 6 à 10.
